# EUROPEAN PATENT APPLICATION

(11) **EP 4 521 678 A1**
(43) Date of publication of application: **12.03.2025**
(21) Application number: 23826343.8
(22) Date of filing: 19.06.2023
(51) Int. Cl.: H04L 9/08

(54) **DEVICE AUTHORIZATION METHOD, ELECTRONIC DEVICE AND SYSTEM**

(30) Priority: 22.06.2022 CN 202210712120
(71) Applicant: Huawei Technologies Co., Ltd., Shenzhen, Guangdong 518129 (CN)
(72) Inventor: HU, Chongyang, Shenzhen, Guangdong 518129 (CN); LI, Changting, Shenzhen, Guangdong 518129 (CN); MA, Siying, Shenzhen, Guangdong 518129 (CN); ZHANG, Yue, Shenzhen, Guangdong 518129 (CN)
(74) Representative: Maiwald GmbH
(86) International application number: PCT/CN2023/101051
(87) International publication number: WO 2023/246695

(57) **Abstract**

A device authorization method, an electronic device, and a system are disclosed. The method may include: binding a controlling device and an accessory device to negotiate a first credential and a second credential, where the first credential is non-distributable and is used to authenticate the controlling device, and the second credential is distributable and is used to authenticate an authorized device; sending, by the controlling device in response to a sharing operation for the second credential, the second credential to the authorized device when an attribute of the second credential is "distributable"; sending, by the authorized device, an authentication request, first information, and verification information to the accessory device, where the verification information is obtained by processing the first information based on the second credential stored in the controlling device; and verifying, by the accessory device, the verification information based on the local second credential, where when the verification succeeds, the authorized device is successfully authenticated. The method may be used offline without depending on cloud processing, so that security of a credential used by the controlling device to access the accessory device can be ensured. Therefore, the method can be used in more application scenarios.

## Description

This application claims priority to Chinese Patent Application No. 202210712120.9, filed with the China National Intellectual Property Administration on June 22, 2022 and entitled "DEVICE AUTHORIZATION METHOD, ELECTRONIC DEVICE, AND SYSTEM", which is incorporated herein by reference in its entirety.

### TECHNICAL FIELD

The present invention relates to the field of terminal technologies, and in particular, to a device authorization method, an electronic device, and a system.

### BACKGROUND

With development of internet of things technologies, there are a growing quantity of internet of things devices, such as a smart acoustic device, a smart lock, a smart camera, and a smart television. These devices (which may also be referred to as accessory devices) may be used by owners of the devices. In some scenarios, the devices need to be authorized to other users for use. For example, an owner of a smart camera may authorize another family member or a friend to access the smart camera. Trusted and secure connection channels need to be established for interconnection between these devices.

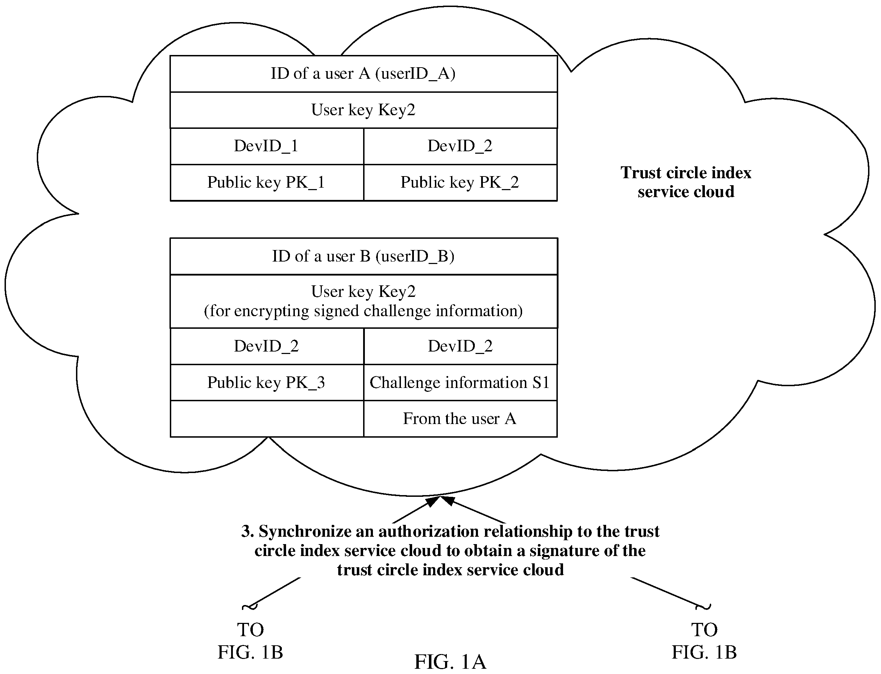

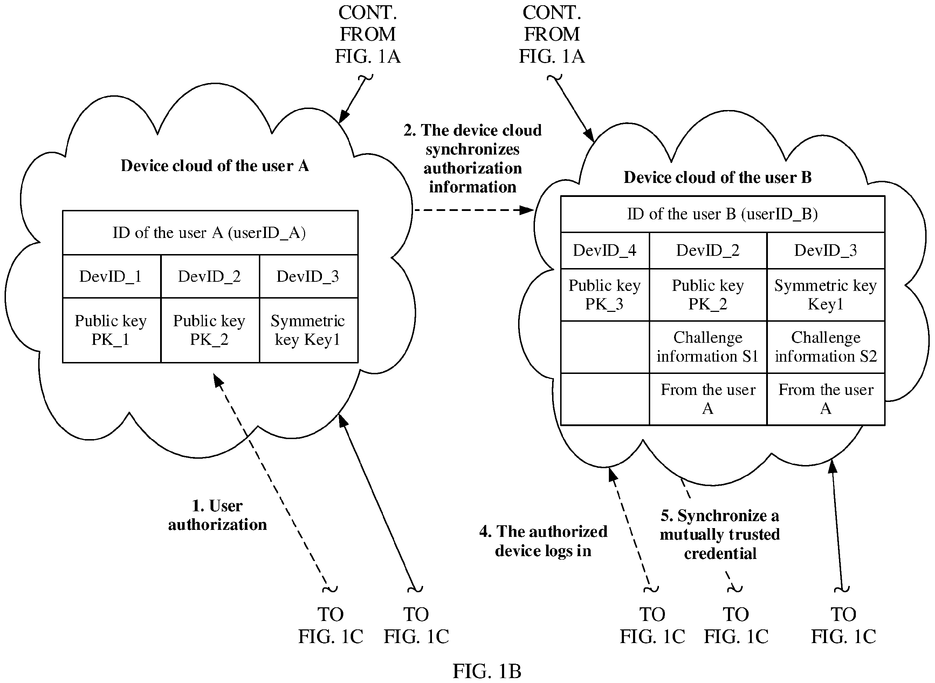

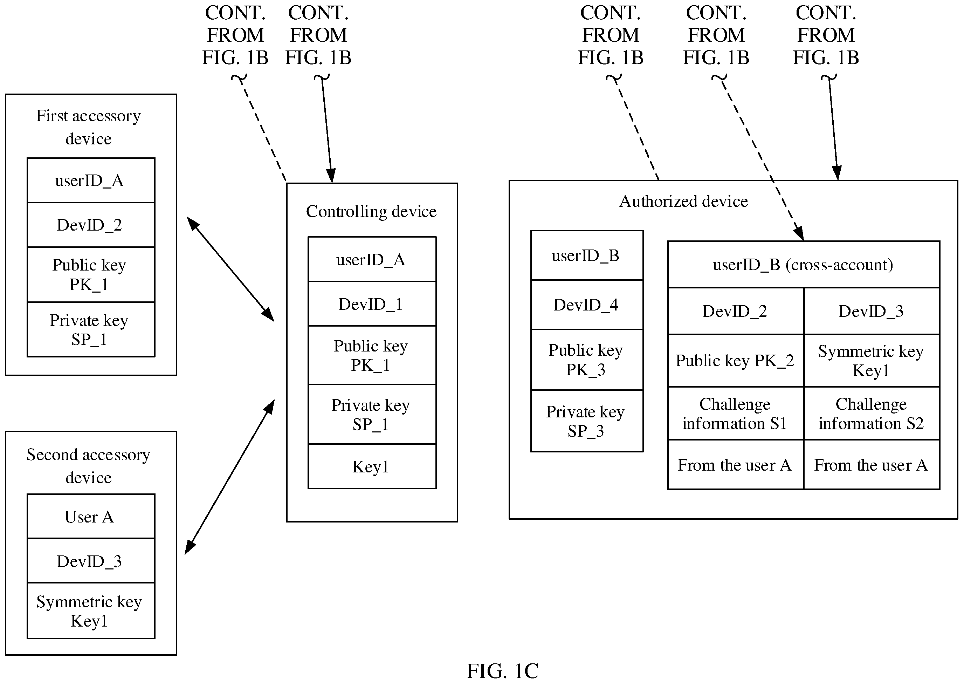

In the device authorization method shown in FIG. 1A to FIG. 1C, when or before a controlling device of a user A shares accessory devices (such as a first accessory device and a second accessory device) of the controlling device with a device (an authorized device) of a user B, the controlling device, the first accessory device, and the second accessory device need to log in to an account of the user A to connect to a device cloud of the user A, and synchronize authorization information of the accessory devices to be shared. For example, the controlling device synchronizes a device identifier DevID_1 and a public key PK_1 of the controlling device, and locally stores a private key SP_1 of the controlling device; the first accessory device synchronizes a device identifier DevID_2 and a public key PK_2 (that is, a credential required for accessing the first accessory device) of the first accessory device, and locally stores a private key SP_2 of the first accessory device; and the second accessory device synchronizes a device identifier DevID_3 and a symmetric key Key1 (that is, a credential required for accessing the second accessory device) of the second accessory device. The authorized device also needs to log in to an account of the user B to connect to a device cloud of the user B, synchronize a public key PK_3 of the authorized device, and locally store a private key SP_3 of the authorized device.

A specific authorization process of a public key may include:
1. User authorization, that is, the user A sends an authorization request to the device cloud of the user A by using the controlling device, to request to authorize the first accessory device and the second accessory device to the user B.
2. The device cloud of the user A synchronizes authorization information to the device cloud of the user B.
3. Synchronize an authorization relationship to a trust circle index service cloud to obtain a signature of the trust circle index service cloud. Before signing, the trust circle index service cloud needs to negotiate a user key with the device cloud, for example, a symmetric key Key2 that is used to encrypt signed challenge information S1. In addition, the trust circle index service cloud does not manage a symmetric credential, and therefore does not synchronize information of the second accessory device. In addition, the trust circle index service cloud does not need to synchronize a credential of the device, and there is no need to store a plurality of copies of the credential. The challenge information may be used to manage and control a process of credential authorization, so as to avoid overlapping.
4. The authorized device logs in to the device cloud of the authorized device.
5. The device cloud of the user B synchronizes authorization information to the authorized device, that is, synchronizes a mutually trusted credential.

The foregoing method depends on cloud processing. If the user does not have an account of the device cloud or the device cannot log in to the device cloud, the accessory device cannot be authorized to a device other than the controlling device for use.

### SUMMARY

Embodiments of this application provide a device authorization method, an electronic device, and a system. The device authorization method does not depend on cloud processing and supports offline authorization.

According to a first aspect, an embodiment of the present invention provides a device authorization method, including:
a controlling device and an accessory device are bound to negotiate a first credential and a second credential, where the first credential is non-distributable and is used to authenticate the controlling device, and the second credential is distributable and is used to authenticate an authorized device; and
in response to a sharing operation for the second credential, the controlling device sends the second credential to the authorized device when an attribute of the second credential is "distributable".

In the foregoing method, two credentials are generated, one is non-distributable and is used for authentication between the controlling device and the accessory device, and the other is distributable and is used for authentication between the authorized device and the accessory device. This ensures security of the credential for the controlling device to access the accessory device. In addition, this method can be used offline without depending on cloud processing, and therefore can be used in more application scenarios.

In a possible implementation, that a controlling device and an accessory device are bound to negotiate a first credential and a second credential includes:
the controlling device establishes a communication connection to the accessory device;
the controlling device generates a shared key based on an out-of-band shared password, where the out-of-band shared password is used to bind the accessory device, and the accessory device includes the shared key or has generated the shared key based on the out-of-band shared password;
the controlling device negotiates the first credential with the accessory device based on the shared key; and
the controlling device negotiates the second credential with the accessory device based on the shared key.

In a possible implementation, the accessory device includes a first public key and a first private key corresponding to the first public key, the controlling device includes a second public key and a second private key corresponding to the second public key, and that the controlling device negotiates the first credential with the accessory device based on the shared key includes:
the controlling device exchanges a public key with the accessory device based on the shared key, to obtain the first public key; and
the controlling device stores the first credential, where the first credential stored in the controlling device includes the first public key, the second public key, and the second private key, and the first credential stored in the accessory device includes the first public key, the first private key, and the second public key.

In a possible implementation, the accessory device includes a third public key and a third private key corresponding to the third public key, the controlling device includes a fourth public key and a fourth private key corresponding to the fourth public key, and that the controlling device negotiates the second credential with the accessory device based on the shared key includes:
the controlling device exchanges a public key with the accessory device based on the shared key, to obtain the third public key; and
the controlling device stores the second credential, where the second credential stored in the controlling device includes the third public key, the fourth public key, and the fourth private key, and the second credential stored in the accessory device includes the third public key, the third private key, and the fourth public key.

Optionally, the second credential sent to the authorized device includes the fourth public key, or includes the fourth public key, the third public key, and the fourth public key.

Optionally, the second credential sent to the authorized device includes the third public key and the fourth public key, and the method further includes:
the controlling device receives a signature request from the authorized request, where the signature request carries the fifth public key, and the fifth public key is a public key of the authorized device;
the controlling device signs the fifth public key by using the fourth private key, to obtain a digital signature; and
the controlling device sends the digital signature to the authorized device, where the digital signature is used by the accessory device to perform authentication on the authorized device.

In a possible implementation, the method further includes:
the controlling device sets a management policy for the first credential and a management policy for the second credential in response to an input user operation, where each management policy includes at least one of a quantity of allowed connection times, allowed connection duration, and accessible data and/or an accessible service; and
the controlling device sends the management policy for the first credential and the management policy for the second credential to the accessory device.

According to a second aspect, an embodiment of this application further provides a device authentication method, including:
an accessory device and a controlling device are bound to negotiate a first credential and a second credential, where the first credential is non-distributable and is used to authenticate the controlling device, and the second credential is distributable and is used to authenticate an authorized device;
the accessory device receives a first authentication request from the authorized device, where the first authentication request includes first information and verification information, and the verification information is obtained by processing the first information based on the second credential stored in the controlling device;
the accessory device verifies the verification information based on the local second credential; and
if the verification succeeds, the accessory device sends, to the authorized device, indication information indicating that the authentication succeeds.

In the foregoing method, two credentials are generated, one is non-distributable and is used for authentication between the controlling device and the accessory device, and the other is distributable and is used for authentication between the authorized device and the accessory device. This ensures security of the credential for the controlling device to access the accessory device. In addition, this method can be used offline without depending on cloud processing, and therefore can be used in more application scenarios.

In a possible implementation, the second credential stored in the controlling device includes the third public key, the fourth public key, and the fourth private key, and the second credential stored in the accessory device includes the third public key, the third private key, and the fourth public key.

In a possible implementation, the first information is a first character string, the verification information is a first digital signature, and the first digital signature is a signature that is of the first character string and that is obtained by using the fourth private key; and that the accessory device verifies the verification information based on the local second credential includes:
the accessory device decrypts the first digital signature by using the local third public key, to obtain a digest value; and
the accessory device calculates a digest value of the first character string, where
if the digest value obtained through calculation is the same as the digest value obtained through decryption, the verification succeeds; or
if the digest value obtained through calculation is different from the digest value obtained through decryption, the verification fails.

In a possible implementation, the method further includes: the authorized device includes a fifth public key and a fifth private key corresponding to the fifth public key, the first information is the fifth public key, the verification information is a third digital signature, and the third digital signature is a signature that is of the fifth public key and that is obtained by using the third private key; and that the accessory device verifies the verification information based on the local second credential includes:
the accessory device decrypts the third digital signature by using the local third public key, to obtain a digest value; and
the accessory device calculates a digest value of the fifth public key, where
if the digest value obtained through calculation is the same as the digest value obtained through decryption, the verification succeeds; or
if the digest value obtained through calculation is different from the digest value obtained through decryption, the verification fails.

In a possible implementation, the method further includes:
the accessory device signs a second character string by using the third private key, to obtain a second digital signature; and
the accessory device sends a second authentication request to the authorized device, where the second authentication request includes the second character string and the second digital signature, and the second digital signature is used by the authorized device to perform signature verification based on the local third public key.

In a possible implementation, the second credential is a symmetric key, the first information is a character string, the verification information is a MAC value of the first information, and that the accessory device verifies the verification information based on the local second credential includes:
the accessory device decrypts the verification information by using the locally stored second credential, to obtain a digest value; and
the accessory device calculates a digest value of the first information, where
if the digest value obtained through calculation is the same as the digest value obtained through decryption, the verification succeeds; or
if the digest value obtained through calculation is different from the digest value obtained through decryption, the verification fails.

In a possible implementation, the method further includes:
the accessory device receives a management policy for the first credential and a management policy for the second credential, where each management policy includes at least one of a quantity of allowed connection times, allowed connection duration, and accessible data and/or an accessible service;
the accessory device receives an access request; and
if the access request comes from the controlling device, the accessory device responds to the access request according to the management policy for the first credential; or
if the access request comes from the authorized device or does not come from the controlling device, the accessory device responds to the access request according to the management policy for the second credential.

The foregoing method may implement different access management for different credentials, and may improve security of internal data of the accessory device.

In a possible implementation, if the access request comes from the authorized device, the responding to the access request according to the management policy for the second credential includes at least one of the following steps:
determining whether a quantity of connections to the authorized device is less than N, where N is a positive integer;
determining whether duration of a connection to the authorized device is less than preset duration; or
determining whether a service or data that is to be accessed by the access request is within a range of accessible data and/or an accessible service corresponding to the second credential.

The foregoing method may implement different access management for different credentials, and may improve security of internal data of the accessory device.

According to a third aspect, an embodiment of this application further provides a device authentication method, including:
the accessory device and the controlling device are bound to negotiate a first credential;
the accessory device receives an authentication request from the authorized device, where the authentication request includes a third credential and the verification information, and the verification information is obtained by the controlling device by processing the third credential based on the locally stored first credential;
the accessory device verifies the verification information by using the local first credential; and
if the verification succeeds, the accessory device sends, to the authorized device, indication information indicating that the authentication succeeds.

In the foregoing method, the controlling device endorses the credential of the authorized device, and does not need to send a credential of the controlling device to the authorized device. This ensures security of the credential for the controlling device to access the accessory device. In addition, this method can be used offline without depending on cloud processing, and therefore can be used in more application scenarios.

In a possible implementation, the first credential includes a first public key of the accessory device, a first private key corresponding to the first public key, a second public key of the controlling device, and a second private key corresponding to the second public key; the third credential is a public key or a symmetric key of the authorized device; the verification information is a signature that is of the third credential and that is obtained by using the second private key stored in the controlling device; and that the accessory device verifies the verification information by using the local first credential includes:
the accessory device performs signature verification on the third credential by using the second public key, and when the signature verification succeeds, the verification succeeds.

In a possible implementation, the first credential includes a first symmetric key, the verification information is a MAC value that is of the third credential and that is calculated by using the first symmetric key stored in the controlling device, and that the accessory device verifies the verification information by using the local first credential includes:
the accessory device calculates a MAC value of the third credential by using the local first symmetric key; and
the accessory device determines that the verification succeeds when the MAC value obtained through calculation is the same as the MAC value carried in the authentication request.

In a possible implementation, the method further includes:
the accessory device receives a management policy for the first credential and a management policy for a non-first credential, where each management policy includes at least one of a quantity of allowed connection times, allowed connection duration, and accessible data and/or an accessible service;
the accessory device receives an access request; and
if the access request comes from the controlling device, the accessory device responds to the access request according to the management policy for the first credential; or
if the access request comes from the authorized device or does not come from the controlling device, the accessory device responds to the access request according to the management policy for the non-first credential.

In a possible implementation, if the access request comes from the authorized device, the responding to the access request according to the management policy for the non-first credential includes at least one of the following steps:
determining whether a quantity of connections to the authorized device is less than N, where N is a positive integer;
determining whether duration of a connection to the authorized device is less than preset duration; or
determining whether a service or data that is to be accessed by the access request is within a range of accessible data and/or an accessible service corresponding to the second credential.

According to a fourth aspect, an embodiment of this application further provides a device authentication method, including:
an authorized device sends an endorsement request to a controlling device, where the endorsement request includes a third credential;
the authorized device receives verification information from the controlling device, where the verification information is obtained by the controlling device by processing the third credential based on a locally stored first credential, and the first credential is used for trusted communication between the controlling device and the accessory device; and
the authorized device sends an authentication request to the accessory device, where the authentication request includes the third credential and the verification information, so that the accessory device verifies the verification information by using the local first credential.

In the foregoing method, the controlling device endorses the credential of the authorized device, and does not need to send a credential of the controlling device to the authorized device. This ensures security of the credential for the controlling device to access the accessory device. In addition, this method can be used offline without depending on cloud processing, and therefore can be used in more application scenarios.

In a possible implementation, the first credential includes a first public key of the accessory device, a first private key corresponding to the first public key, a second public key of the controlling device, and a second private key corresponding to the second public key; the third credential is a public key or a symmetric key of the authorized device; and the verification information is a signature that is of the third credential and that is obtained by using the second private key stored in the controlling device; or
the first credential includes a first symmetric key, and the verification information is a MAC value that is of the third credential and that is calculated by using the first symmetric key stored in the controlling device.

According to a fifth aspect, an embodiment of this application further provides an electronic device, including at least one processor and at least one memory, where the at least one processor is coupled to the at least one memory, the at least one memory is configured to store computer instructions, and when the processor executes the computer instructions, the electronic device performs the method performed by the controlling device according to any one of the first aspect or the implementations of the first aspect, or performs the method performed by the accessory device according to any one of the second aspect or the third aspect or the implementations of the second aspect or the third aspect, or performs the method performed by the authorized device according to any one of the fourth aspect or the implementations of the fourth aspect.

Optionally, the electronic device may further include another element or module configured to implement the method according to any one of the first aspect or the possible implementations of the first aspect, or includes another element or module configured to implement the method according to any one of the second aspect and the third aspect or the possible implementations of the second aspect and the third aspect, and includes another element or module configured to implement the method according to any one of the fourth aspect or the possible implementations of the fourth aspect. For specific implementation and beneficial effects of the steps performed by the processor in the electronic device, refer to related descriptions in any one of the first aspect to the fourth aspect or the possible implementations of the first aspect to the fourth aspect. Details are not described herein again.

According to a sixth aspect, an embodiment of this application further provides a communication system. The system may include a controlling device, an authorized device, and an accessory device. The controlling device is configured to implement the method according to any one of the first aspect or the possible implementations of the first aspect; the accessory device is configured to implement the method according to any one of the second aspect and the third aspect or the possible implementations of the second aspect and the third aspect; and the authorized device is configured to implement the method according to any one of the fourth aspect or the possible implementations of the fourth aspect.

According to a seventh aspect, an embodiment of this application further provides a computer-readable storage medium, where the computer-readable storage medium stores computer program instructions, and when the computer program instructions are executed by a processor, the processor is enabled to perform the method performed by the controlling device according to any one of the first aspect or the implementations of the first aspect, or perform the method performed by the accessory device according to any one of the second aspect or the third aspect or the implementations of the second aspect or the third aspect, or perform the method performed by the authorized device according to any one of the fourth aspect or the implementations of the fourth aspect.

### BRIEF DESCRIPTION OF DRAWINGS

The following describes accompanying drawings in embodiments of this application.
FIG. 1A to FIG. 1C are an illustration diagram of a device authorization method according to a conventional technology;
FIG. 2A is a diagram of an architecture of a communication system according to an embodiment of this application;
FIG. 2B is a diagram of an architecture of another communication system according to an embodiment of this application;
FIG. 2C is a diagram of an architecture of still another communication system according to an embodiment of this application;
FIG. 3 is an illustration diagram of a device authorization method according to an embodiment of this application;
FIG. 4A and FIG. 4B are a schematic flowchart of a device authorization method according to an embodiment of this application;
FIG. 5 is a schematic flowchart of a method for binding a controlling device and an accessory device according to an embodiment of this application;
FIG. 6A to FIG. 6C-2 are schematic flowcharts of some authentication methods according to embodiments of this application;
FIG. 6D is a schematic flowchart of a method for processing an access request according to a management policy for a second credential according to an embodiment of this application;
FIG. 7A and FIG. 7B are a schematic flowchart of another device authorization and authentication method according to an embodiment of this application;
FIG. 8 is an illustration diagram of a device authorization method according to an embodiment of this application;
FIG. 9A and FIG. 9B are a schematic flowchart of a device authorization method according to an embodiment of this application;
FIG. 10A and FIG. 10B are a schematic flowchart of still another device authorization and authentication method according to an embodiment of this application; and
FIG. 11 is a diagram of a structure of an electronic device according to an embodiment of this application.

### DESCRIPTION OF EMBODIMENTS

The following clearly and thoroughly describes technical solutions in embodiments of this application with reference to accompanying drawings. In the descriptions of embodiments of this application, unless otherwise specified, "/" indicates "or". For example, A/B may indicate A or B. The term "and/or" in this specification only describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are only intended for a purpose of description, and should not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The following describes technical terms in this application.

### (1) Credential, symmetric credential, and asymmetric credential

In this embodiment of this application, a credential may be used for identity validity authentication, to implement trusted communication between two devices. In some embodiments, a credential may also be used to encrypt to-be-transmitted data. A symmetric credential means that both communication parties use a same credential. An asymmetric credential means that both communication parties use different credentials.

For example, an authentication code (authentication code) is a symmetric credential, and two trusted communication parties may negotiate/exchange a same secret in advance.

For another example, a symmetric key (symmetric key) used for authentication is a symmetric credential, and both communication parties need to negotiate and share the symmetric key in advance. A sender and a receiver can also use a same symmetric key to encrypt and decrypt to-be-transmitted data.

For another example, a public key (public key) and a private key that are used together for authentication are asymmetric credentials. Both communication parties can exchange respective public keys of the communication parties and store respective private keys (private keys) of the communication parties. Either communication party can use a public key of an opposite party to encrypt data and use the private key of the communication party to decrypt data. The sender can use the private key of the sender to sign the data, and the receiver can use a public key of the sender to perform signature verification.

In some embodiments of this application, a controlling device and an accessory device may exchange respective public keys of the controlling device and the accessory device. The controlling device may use the private key of the controlling device to sign a credential (which may be a symmetric credential or an asymmetric credential) sent by the authorized device, that is, the authorized device endorses the credential, and the accessory device uses the signed credential to perform authentication on the authorized device.

### (2) Direct credential and indirect credential

In this embodiment of this application, an attribute may be set for a credential. One type of the attribute may be "direct" or "indirect". A credential whose attribute is "direct" is a direct credential, and a credential whose attribute is "indirect" is an indirect credential. The direct credential is used for communication between the accessory device and the controlling device, and the indirect credential is used for communication between the accessory device and the authorized device. In other words, the direct credential is a credential that is directly used by the authorized device and the accessory device, and the indirect credential is a credential that is not directly used by the controlling device but used by the authorized device.

### (3) Authentication

A purpose of the authentication is to verify an identity of an opposite party. A private key in asymmetric keys and a symmetric key may each represent an identity. The authentication does not focus on confidentiality of transmitted data, but is used to verify whether an opposite party really has the private key or the symmetric key. To ensure information security of the private key or the symmetric key, a "zero knowledge proof (zero knowledge proof)" technology is used instead of directly transmitting the private key or the symmetric key during authentication.

### (4) Signature and signature verification

Signature: Before sending data D, a sender first uses a hash function negotiated by both communication parties to calculate a digest value of the sender, and then uses a private key of the sender to encrypt the digest value, where an obtained ciphertext is a signature or a message authentication code (message authentication code, MAC); and then the sender sends the signature (or the MAC value) and the data D to the receiver.

Signature verification: After receiving a packet, a receiver uses a public key of the sender to decrypt the signature to obtain the digest value; calculates the digest value of the data in the packet through the same operation as that of the sender; and then compares the digest value obtained through calculation with the decrypted digest value. If the two values are the same, it indicates that the data D is not tampered with; or if the two values are different, it indicates that the data D is tampered with.

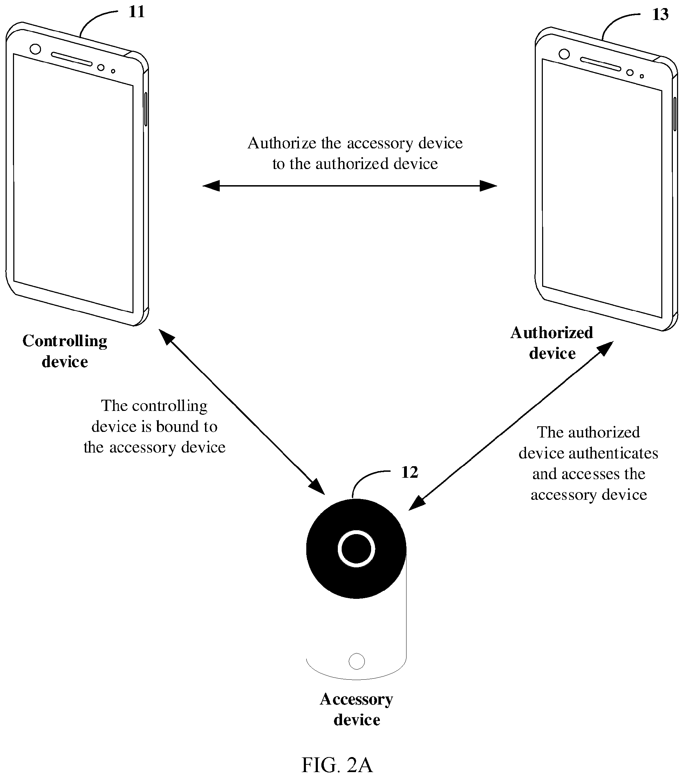

FIG. 2A is a diagram of an architecture of a communication system according to an embodiment of this application. The communication system may include but is not limited to a controlling device 11, an accessory device 12, and an authorized device 13.

The accessory device 12 may be, for example, a smart acoustic device, a smart camera, a smart lock, a smart television, a lamp, an air conditioner, a rice cooker, a water heater, a floor-scanning robot, or another smart home device, or may be an office device such as a printer or a projector, or another device.

The controlling device 11 or the authorized device 13 may be a terminal device such as a mobile phone, a tablet computer, or a notebook computer.

The controlling device 11 may be a device bound to the accessory device 12. After establishing a communication connection to the accessory device 12, the controlling device 11 may generate at least one credential based on an out-of-band shared password or agreed-upon information, and the credential may be used as a credential for the controlling device 11 or the authorized device 13 to access or control the accessory device 12.

When the accessory device is authorized to be used by the authorized device, the authorized device needs to perform authentication based on a credential to ensure secure and trusted communication between the devices.

In some embodiments, when the controlling device 11 is bound to the accessory device 12, two credentials may be generated: a direct credential (also referred to as a first credential) and an indirect credential (also referred to as a second credential). The controlling device 11 may establish trusted communication with the spare part of the accessory device 12 by using the direct credential. The controlling device 11 may send the indirect credential to the authorized device 13, and the authorized device 13 establishes a trusted communication connection to the accessory device based on the indirect credential. For specific implementation, refer to Embodiment 1 and Embodiment 2. Details are not described herein again.

In some embodiments, when the controlling device 11 is bound to the accessory device 12, at least one asymmetric credential may be generated. The authorized device 13 may send an endorsement request to the controlling device 11, to request the controlling device 11 to endorse a credential (which may be a symmetric credential, or may be an asymmetric credential, and is referred to as a third credential in this embodiment of this application) of the authorized device 13. The controlling device 11 may sign the third credential by using a private key of the controlling device 11, and send a signature of the third credential to the authorized device 13. In this case, the authorized device 13 may establish a trusted communication connection to the accessory device based on the signature of the third credential. For specific implementation, refer to Embodiment 3 and Embodiment 4. Details are not described herein again.

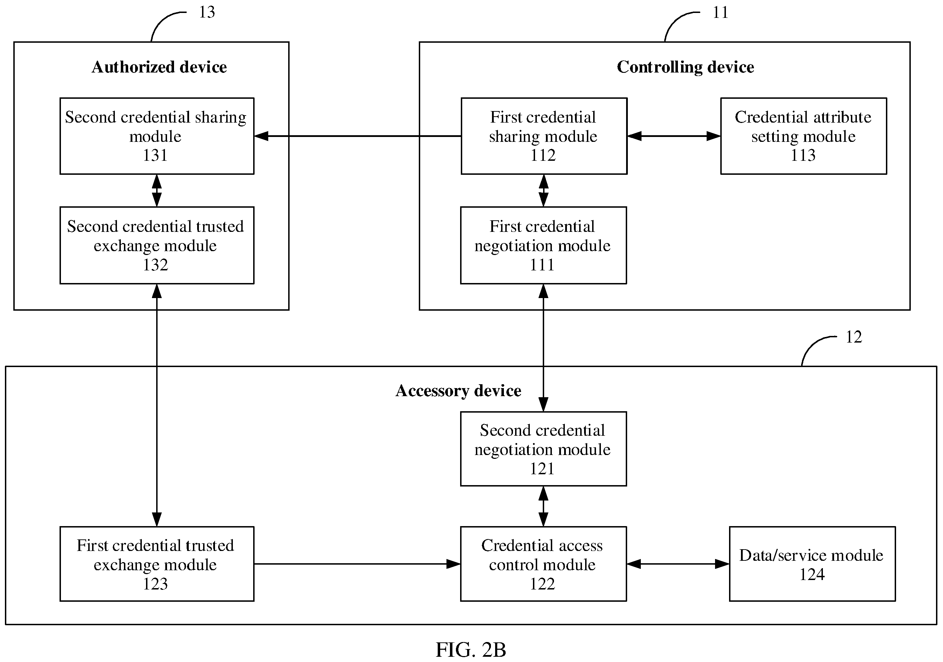

FIG. 2B is a diagram of an architecture of another communication system according to an embodiment of this application.

The controlling device 11 may include a first credential negotiation module 111, a first credential sharing module 112, and a credential attribute setting module 113. The first credential negotiation module 111 is configured to negotiate with the accessory device 12 to obtain at least one credential, for example, the first credential and the second credential. The first credential sharing module 112 is configured to determine, based on an attribute of a credential, whether a to-be-shared credential (for example, the second credential) can be shared, and if the to-be-shared credential can be shared, share the second credential with the authorized device 13. The credential attribute setting module 113 is configured to set an attribute of a credential, for example, the attribute of the first credential to "direct and non-distributable" and the attribute of the second credential to "indirect and distributable". The first credential sharing module 112 is configured to share the second credential with the authorized device 13.

The authorized device 13 may include a second credential sharing module 131 and a second credential trusted exchange module 132. The second credential sharing module 131 is configured to receive the second credential shared by the controlling device 11, then send, by using the second credential trusted exchange module 132, the credential to the accessory device 12 to verify an identity, and then receive a verification result from the accessory device 12.

The accessory device 12 may include a second credential negotiation module 121, a credential access control module 122, a first credential trusted exchange module 123, and a data/service module 124. The second credential negotiation module 121 is configured to negotiate with the controlling device 11 to obtain at least one credential, for example, the first credential and the second credential. The credential access control module 122 is configured to determine, based on a credential management policy, a quantity of accessible times, accessible duration, accessible data and/or an accessible service, and the like that correspond to the credential. The first credential trusted exchange module 123 is configured to verify an identity of the authorized device based on the second credential. The data/service module 124 is configured to store data and a service, so as to process access requests from the controlling device 11 and the authorized device 13.

For specific implementation, refer to Embodiment 1 and Embodiment 2. Details are not described herein again.

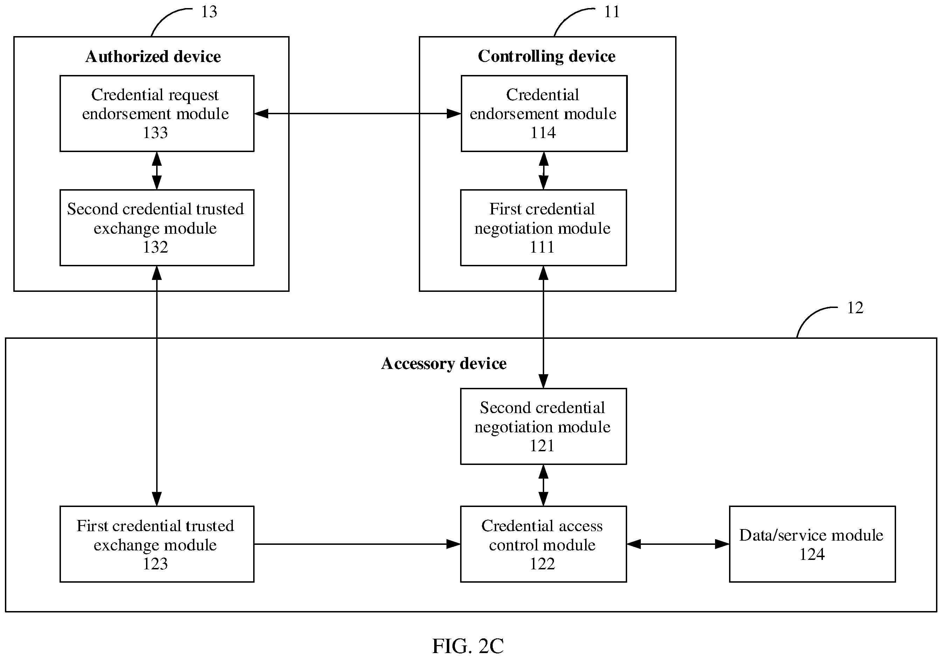

FIG. 2C is a diagram of an architecture of another communication system according to an embodiment of this application.

The controlling device 11 may include a first credential negotiation module 111 and a credential endorsement module 114. The first credential negotiation module 111 is configured to negotiate with the accessory device 12 to obtain at least one credential, for example, the first credential. The credential endorsement module 114 is configured to sign a credential (that is, the third credential) from the authorized device, endorse the credential, and send a signature of the third credential to the authorized device 13.

The authorized device 13 may include a credential request endorsement module 133 and a second credential trusted exchange module 132. The credential request endorsement module 133 is configured to send an endorsement request to the controlling device 111 to request the controlling device 11 to endorse a credential (the third credential) of the controlling device 11, and accept a signature that is of the third credential and that is sent by the controlling device 11. Further, the second credential trusted exchange module 132 sends the third credential and the signature of the third credential to the accessory device 12 to verify an identity, and receive a verification result from the accessory device 12.

The accessory device 12 may include a second credential negotiation module 121, a credential access control module 122, a first credential trusted exchange module 123, and a data/service module 124. The second credential negotiation module 121 is configured to negotiate with the controlling device 11 to obtain at least one credential, for example, the first credential. The credential access control module 122 is configured to determine, based on a credential management policy, a quantity of accessible times, accessible duration, accessible data and/or an accessible service, and the like that correspond to the credential. The first credential trusted exchange module 123 is configured to verify an identity of the authorized device based on the signature of the third credential. The data/service module 124 is configured to store data and a service, so as to process access requests from the controlling device 11 and the authorized device 13.

For specific implementation, refer to Embodiment 3 and Embodiment 4. Details are not described herein again.

The following describes methods provided in the embodiments of this application.

### Embodiment 1

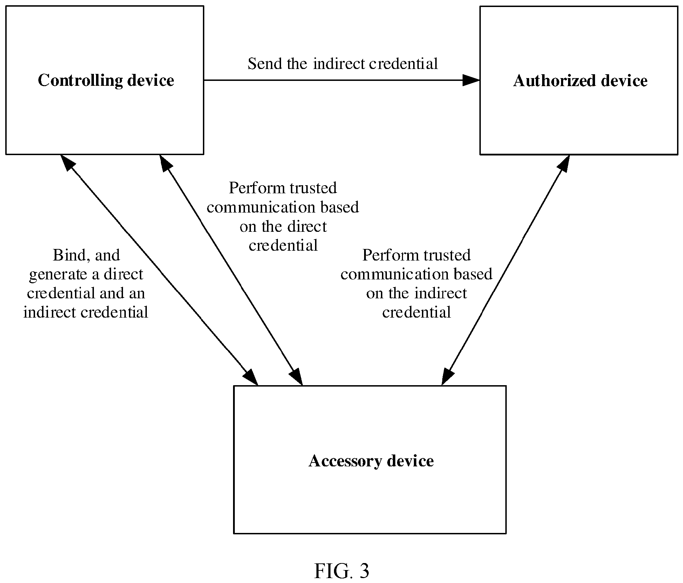

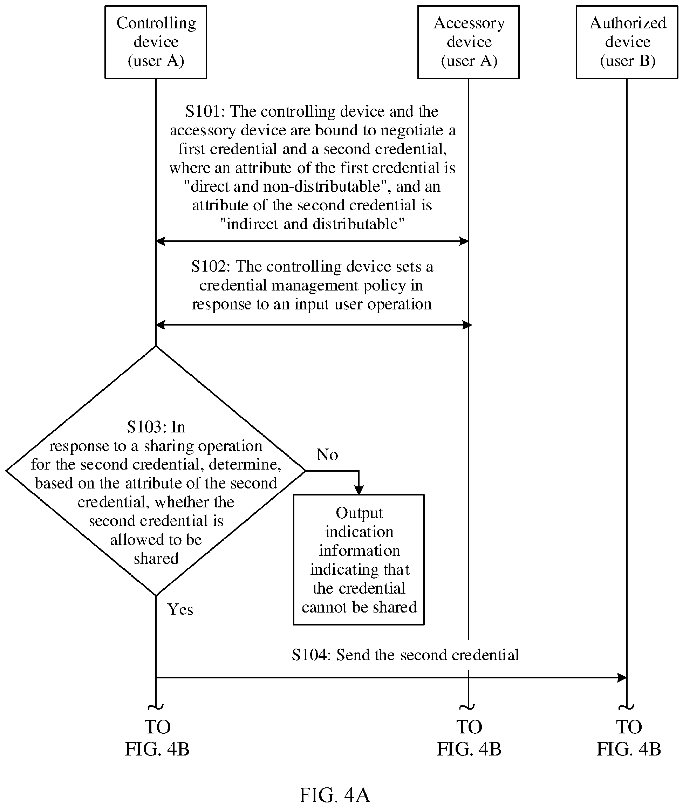

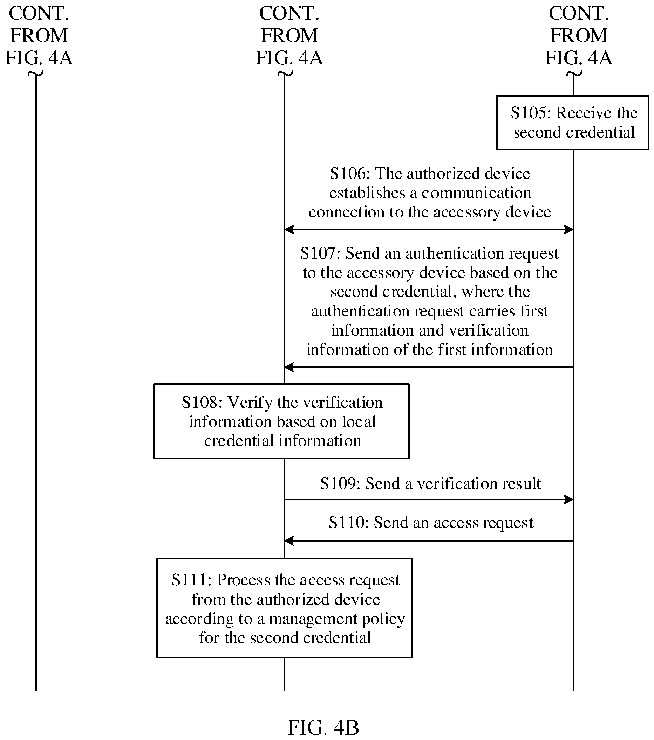

FIG. 3, FIG. 4A, and FIG. 4B are illustration diagrams and schematic flowcharts of a device authorization method. The method may be implemented by the system shown in FIG. 2A or FIG. 2B, and may include three phases: authorization, authentication, and data access.

### (1) Authorization phase

S101: A controlling device and an accessory device are bound to negotiate a first credential and a second credential. An attribute of the first credential is "direct and non-distributable", and an attribute of the second credential is "indirect and distributable".

Specifically, the controlling device may establish a communication connection to the accessory device in a communication manner such as Bluetooth or Wi-Fi, so as to be bound to the accessory device. In a binding process, a credential used to establish trusted communication between the controlling device and the accessory device, namely the first credential, is generated, and a credential used to authorize another device to establish trusted communication with the accessory device, namely the second credential, is negotiated. The first credential is a direct credential, and the second credential is an indirect credential.

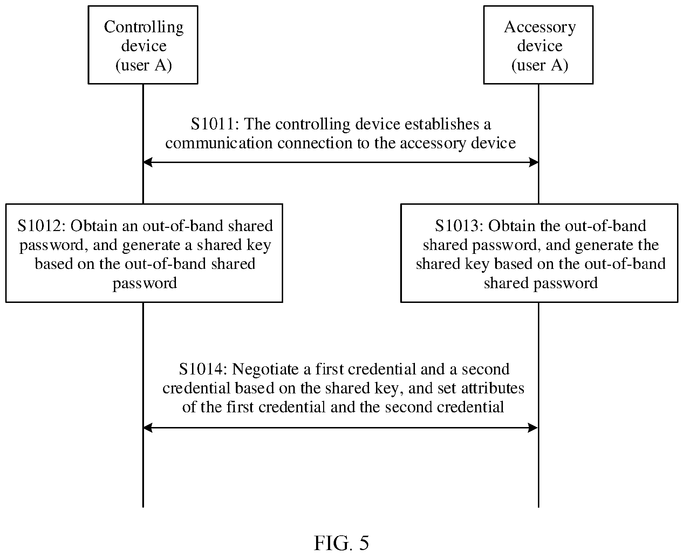

FIG. 5 shows a method for binding a controlling device and an accessory device according to an embodiment of this application. The method may include but is not limited to the following steps.

S1011: The controlling device establishes a communication connection to the accessory device.

Specifically, the controlling device may establish a short-distance communication connection, such as Bluetooth, Wi-Fi, or NFC, to the accessory device. After the communication connection is established, S1012 and S1013 may be performed.

S1012: The controlling device obtains an out-of-band shared password, and generates a shared key based on the out-of-band shared password.

The out-of-band shared password may be a secret known to a user. The user may input the out-of-band shared password to both the controlling device and the accessory device. After receiving the out-of-band shared password, the controlling device and the accessory device separately perform an operation based on the out-of-band shared password by using a same algorithm, and generate a same key, which is referred to as a shared key herein.

For example, the controlling device and the accessory device may negotiate to generate the shared key by using a password authenticated key exchange (Password authenticated key exchange, PAKE) protocol or an SPAKE protocol.

S1013: The accessory device obtains the out-of-band shared password, and generates the shared key based on the out-of-band shared password.

It should be understood that the accessory device and the controlling device use the same out-of-band shared password, and the generated shared keys are also the same. For specific implementation, refer to S1012. Details are not described herein again.

In some embodiments, the accessory device may not perform S1013, and the shared key may be stored in the accessory device in advance.

S1014: The controlling device and the accessory device negotiate the first credential and the second credential based on the shared key, and set attributes of the first credential and the second credential.

Based on whether the first credential and the second credential are symmetric keys, a plurality of implementations are discussed as follows:

Implementation 1: Both the first credential and the second credential are symmetric keys.

In some embodiments, after obtaining the shared key, the controlling device and the accessory device separately negotiate twice based on the shared key by using the PAKE protocol or the SPAKE protocol, to obtain the first credential (a symmetric key Key1) and the second credential (a symmetric key Key2).

In some other embodiments, the first credential is a symmetric key, and the shared key is the first credential. Negotiation is performed again based on the shared key by using the PAKE protocol or the SPAKE protocol, to obtain the second credential, for example, the symmetric key Key2.

In this case, both the controlling device and the accessory device store the same symmetric key. For example, both the controlling device and the accessory device store the content shown in Table 1.

**Table 1**

| Credential name/Number | Credential information (local) | Attribute |
|---|---|---|
| First credential | Symmetric key Key1 | Direct and non-distributable |
| Second credential | Symmetric key Key2 | Indirect and distributable |

The attribute of the credential may be set by either the controlling device or the accessory device, and then shared to the other party, or may separately set by the controlling device and the accessory device. This is not limited herein.

Implementation 2: Both the first credential and the second credential are asymmetric keys.

Specifically, the controlling device and the accessory device may separately generate two pairs of public and private keys. For example, one pair of public and private keys that is generated by the accessory device includes a public key PK1 and a private key SK1, and the other pair of public and private keys includes a public key PK3 and a private key SK3; and one pair of public and private keys that is generated by the controlling device includes a public key PK2 and a private key SK2, and the other pair of public and private keys includes a public key PK4 and a private key SK4. Further, both the controlling device and the accessory device may exchange respective public keys to obtain the first credential and the second credential. The first credential includes the public key PK1 and the private key SK1 of the accessory device, and the public key PK2 and the private key SK2 of the controlling device. The second credential includes the public key PK3 and the private key SK3 of the accessory device, and the public key PK4 and the private key SK4 of the controlling device. When a public key and a private key are used as credentials, the credentials are usually stored in a plurality of devices in a distributed manner. In this case, the credentials and credential attributes that are stored in the accessory device are shown in the following Table 2, and the credentials and credential attributes that are stored in the controlling device are shown in the following Table 3.

**Table 2**

| Credential name/Number | Credential information locally stored in the accessory device | Attribute |
|---|---|---|
| First credential | Public key PK1, private key SK1, and public key PK2 | Direct and non-distributable |
| Second credential | Public key PK3, private key SK3, and public key PK4 | Indirect and distributable |

**Table 3**

| Credential name/Number | Credential information locally stored in the controlling device | Attribute |
|---|---|---|
| First credential | Public key PK2, private key SK2, and public key PK1 | Direct and non-distributable |
| Second credential | Public key PK4, private key SK4, and public key PK3 | Indirect and distributable |

### Implementation 3: The first credential is a symmetric key, and the second credential is an asymmetric key.

The first credential is the shared key or the symmetric key Key1, and the controlling device and the accessory device may separately generate one pair of public and private keys. For example, one pair of public and private keys that is generated by the accessory device includes a public key PK3 and a private key SK3; and one pair of public and private keys that is generated by the controlling device includes a public key PK4 and a private key SK4. The symmetric key Key1 is used as the first credential. Further, the controlling device and the accessory device may exchange respective public keys to obtain the second credential. The second credential includes the public key PK3 and the private key SK3 of the accessory device, and the public key PK4 and the private key SK4 of the controlling device. Credentials and credential attributes that are stored in the accessory device are shown in the following Table 4, and credentials and credential attributes that are stored in the controlling device are shown in the following Table 5.

**Table 4**

| Credential name/Number | Credential information locally stored in the accessory device | Attribute |
|---|---|---|
| First credential | Symmetric key Key1 | Direct and non-distributable |
| Second credential | Public key PK3, private key SK3, and public key PK4 | Indirect and distributable |

**Table 5**

| Credential name/Number | Credential information locally stored in the controlling device | Attribute |
|---|---|---|
| First credential | Symmetric key Key1 | Direct and non-distributable |
| Second credential | Public key PK4, private key SK4, and public key PK3 | Indirect and distributable |

### Implementation 4: The first credential is an asymmetric key, and the second credential is a symmetric key.

The controlling device and the accessory device may separately generate one pair of public and private keys. For example, one pair of public and private keys that is generated by the accessory device includes a public key PK1 and a private key SK1; and one pair of public and private keys that is generated by the controlling device includes a public key PK3 and a private key SK3. Further, both the controlling device and the accessory device may exchange respective public keys to obtain the first credential. The first credential includes the public key PK1 and the private key SK1 of the accessory device, and the public key PK2 and the private key SK2 of the controlling device. In some embodiments, the second credential is the shared key, the symmetric key Key1, or the symmetric key Key2. For specific implementation, refer to the foregoing implementation 1. Details are not described herein again.

In this case, an example in which the second credential is the symmetric key Key2 is used. After the public keys are exchanged, credentials and credential attributes that are stored in the accessory device are shown in the following Table 6, and the first credential and the second credential that are stored in the controlling device are shown in the following Table 7.

**Table 6**

| Credential name/Number | Credential information locally stored in the accessory device | Attribute |
|---|---|---|
| First credential | Public key PK1, private key SK1, and public key PK2 | Direct and non-distributable |
| Second credential | Symmetric key Key2 | Indirect and distributable |

**Table 7**

| Credential name/Number | Credential information locally stored in the controlling device | Attribute |
|---|---|---|
| First credential | Public key PK2, private key SK2, and public key PK1 | Direct and non-distributable |
| Second credential | Symmetric key Key2 | Indirect and distributable |

After obtaining the first credential, the controlling device may perform trusted communication with an authorized device.

For example, the controlling device and the accessory device may use the symmetric key Key1 to encrypt data to be transmitted to each other, and may also use the symmetric key to decrypt data received from each other.

For another example, the controlling device may use the public key PK1 to encrypt data to be transmitted to the accessory device, and the accessory device decrypts the data by using the private key SK1. Similarly, the accessory device may use the public key PK2 to encrypt data to be transmitted to the controlling device, and the controlling device decrypts the data by using the private key SK2.

It should be noted that, in this application, the public key PK1, the private key SK1, the public key PK2, and the private key SK2 are all referred to as content of the first credential. However, the private key SK1 and the public key PK2 that are stored in the accessory device may also be referred to as one credential, and the private key SK2 and the public key PK1 that are stored in the controlling device may be referred to as another credential. The two credentials are a pair of credentials. In other words, the first credential in this application may be understood as a pair of credentials. Similarly, the second credential may also be understood as a pair of credentials.

S102: The controlling device sets a credential management policy in response to an input user operation.

The user can set the credential management policy by using the controlling device. The management policy may include management of a quantity of allowed connection times, allowed connection duration, accessible data and/or an accessible service, and the like of a device that uses the credential. For example, in response to an operation of the user, the controlling device may set different management policies for different credentials or credentials with different attributes, to obtain a correspondence between the credentials and the quantity of allowed connection times, the allowed connection duration, and the accessible data and/or the accessible service. Further, the correspondence may be further sent to the accessory device, so that the accessory device processes access requests from different devices based on the credential management policy. Table 8 shows an example of credential management.

**Table 8**

| Credential name/Attribute | Accessible data and/or service | Quantity of allowed connection times | Allowed connection duration |
|---|---|---|---|
| First credential/direct | Service 1, data 1, service 2, and data 1 | Not limited | Not limited |
| Second credential/indirect | Service 1 and data 1 | N times | Duration T |

N is a positive integer. N may be one or more than one, for example, two or ten. T may be one minute, 10 minutes, 20 minutes, or the like. It should be understood that N and T may be set based on a requirement of an application scenario. This is not limited herein.

In some embodiments, S102 may alternatively be performed by the accessory device.

S102 may alternatively be performed at another time. For example, when the set correspondence is a correspondence between an attribute of a credential and the quantity of allowed connection times, the allowed connection duration, and the accessible data and/or the accessible service, S102 may be performed in any phase or at any time of any phase.

S103: In response to a sharing operation for the second credential, the controlling device determines, based on the attribute of the second credential, whether the second credential is allowed to be shared. If the second credential is allowed to be shared, S104 is performed; or if the second credential is not allowed to be shared, indication information indicating that the credential cannot be shared is output.

When a user A wants to share a credential with a user B, the user A may input a sharing operation for the second credential. After receiving the sharing operation for the credential, the controlling device determines, based on attribute information of the to-be-shared credential, whether the credential is allowed to be shared. If the attribute of the to-be-shared credential is "indirect" and/or "shareable", the credential is allowed to be shared; or if the attribute of the to-be-shared credential is not "indirect" and/or "shareable", the credential is not allowed to be shared.

S104: The controlling device sends the second credential to the authorized device.

In some embodiments, the controlling device may actively send the second credential to the authorized device. For example, the controlling device sends the second credential to the authorized user through instant communication. In this case, the controlling device further sends an identifier of the accessory device to the authorized device, to indicate the accessory device to which the credential is applied.

In some other embodiments, the authorized device may send a credential request to the controlling device, where the credential request carries the identifier of the accessory device, to request use of the credential of the accessory device. In response to the credential request, the controlling device performs S103 and S104 to send the second credential to the authorized device.

In some embodiments, the second credential is a symmetric key, and the sent second credential is the symmetric key Key2.

In some other embodiments, the second credential is an asymmetric key, the sent second credential is the public key PK3 of the accessory device or the second credential public key PK3, and the private key SK4 is sent. Authentication methods vary depending on sent content, and are described in detail in steps S107 and S108.

S105: The authorized device receives the second credential.

### (2) Authentication phase

S106: The authorized device establishes a communication connection to the accessory device.

Specifically, a connection manner may include but is not limited to a short-distance communication connection such as Bluetooth, Wi-Fi, or NFC.

S107: The authorized device sends an authentication request to the accessory device based on the second credential, where the authentication request carries first information and verification information of the first information.

S108: The accessory device verifies the verification information based on local credential information.

The local credential information of the accessory device includes the first credential and the second credential that are locally stored in the accessory device. For details, refer to Table 1, Table 2, Table 4, and Table 6 in the foregoing implementations 1 to 4. Details are not described herein again.

For example, the first information is a character string, the verification information is a digital signature, and the digital signature is a signature that is of the character string and that is obtained by using a fourth private key. For another example, the first information is a public key, and the verification information is a third digital signature that is of the public key and that is obtained by using the fourth private key. For still another example, the first information is a character string, and the verification information is a MAC value of the first information. For details, refer to detailed descriptions in the following implementations 1 to 3. Details are not described herein again.

The authentication request is used to request the accessory device to verify whether the authorized device is a trusted device. In Embodiment 1 and Embodiment 2, the accessory device may verify whether the authorized device includes the symmetric key Key2 (when the second credential is a symmetric credential) that is the same as the second credential locally stored in the accessory device or a private key SK4 (when the second credential is an asymmetric credential) that matches the second credential locally stored in the accessory device.

S109: The accessory device sends a verification result to the authorized device.

The verification result includes that the verification succeeds and the verification fails. When the verification in S108 succeeds, the accessory device sends, to the authorized device, indication information indicating that the verification succeeds; or if the verification fails, the accessory device sends, to the authorized device, indication information indicating that the verification fails.

After establishing the communication connection, the authorized device may attempt to establish a trusted connection to the accessory device by using the second credential. Based on whether the second credential is a symmetric credential or an asymmetric credential, specific implementation of the foregoing authentication process (S107 to S109) are described in two implementations.

### Implementation 1:

In implementation 1, the second credential is a symmetric credential, that is, the symmetric key Key2. The controlling device, the authorized device, and the accessory device all store the symmetric key Key2 locally.

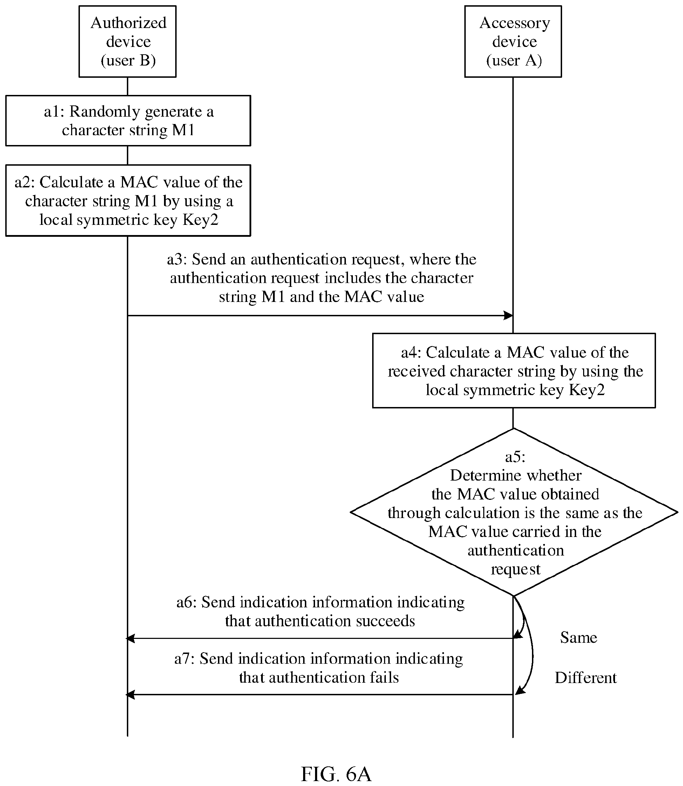

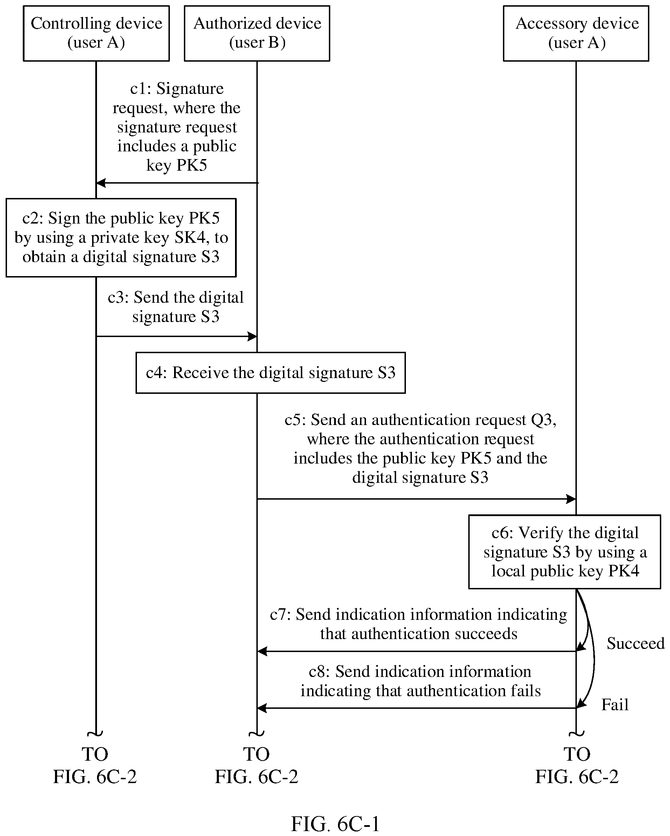

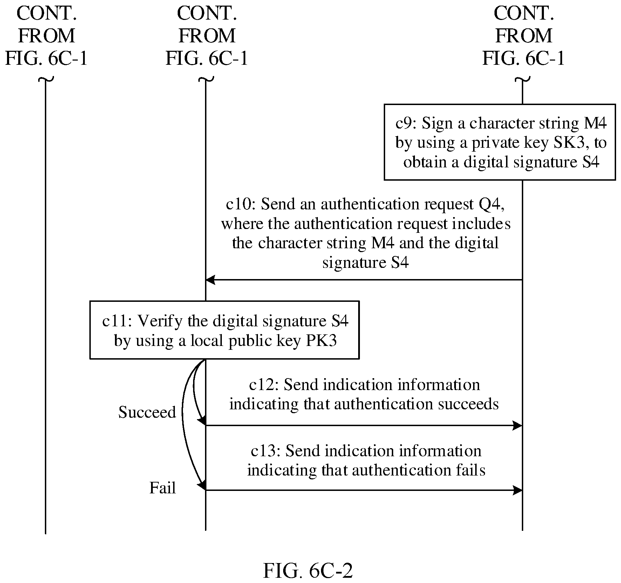

As shown in FIG. 6A, the authentication method may include but is not limited to the following steps.

a1: The authorized device randomly generates a character string M1.

a2: The authorized device calculates a MAC value of the character string M1 by using the local symmetric key Key2.

Specifically, the authorized device first calculates a digest value of the character string M1, and then encrypts the digest value by using the symmetric key Key2, to obtain the MAC value of the character string M1.

a3: The authorized device sends an authentication request, where the authentication request includes the character string M1 and the MAC value.

a4: The accessory device calculates a MAC value of the received character string by using the local symmetric key Key2.

a5: The accessory device determines whether the MAC value obtained through calculation is the same as the MAC value carried in the authentication request. If the two MAC values are the same, a6 is performed; or if the two MAC values are different, a7 is performed.

The authentication request further includes an identifier of the authorized device. After the accessory device receives the authentication request, if the device that sends the authentication request is not the controlling device, the accessory device selects to verify the authentication request by using the local second credential. Specifically, the accessory device calculates the MAC value of the received character string by using the local symmetric key Key2. If the MAC value obtained through calculation is the same as the MAC value carried in the authentication request, it indicates that the authorized device has the same symmetric key Key2 as the accessory device, the authorized device is a trusted device, and the authentication succeeds. If the two MAC values are different, it indicates that the local symmetric key Key2 of the authorized device is different from the local symmetric key Key2 of the accessory device, the authorized device is not a trusted device, and the authentication fails.

a6: The accessory device sends, to the authorized device, indication information indicating that the authentication succeeds.

a7: The accessory device sends, to the authorized device, indication information indicating that the authentication fails.

It should be understood that, if the device that sends the authentication request is the controlling device, the accessory device selects to verify the authentication request by using the first credential. A verification method is the same as that for verifying the authentication request by using the second credential, and details are not described herein again.

It should be further understood that the authorized device may reversely verify whether the accessory device is a trusted device. In this case, the method is the same as that in the foregoing steps a1 to a7, and the authorized device and the accessory device in steps a1 to a7 are exchanged.

In another implementation, to ensure security of the symmetric key Key2, the authentication request may not include the symmetric key Key2, but include a digest value of the symmetric key Key2. After receiving the authentication request, the accessory device may calculate digest values of the local second credential (the symmetric key Key2). If the digest values obtained through calculation include a digest value that is the same as the digest value carried in the authentication request, the authentication succeeds; or if the digest values obtained through calculation do not include a digest value that is the same as the digest value carried in the authentication request, the authentication fails.

### Implementation 2:

The second credential is an asymmetric credential, that is, PK3, SK3, PK4, and SK4. The second credentials locally stored in the controlling device include PK3, PK4, and SK4, and the second credentials locally stored in the accessory device include PK3, SK3, and PK4. The second credential sent by the controlling device to the authorized device includes at least SK4, for example, includes PK3, PK4, and SK4, that is, the second credential locally stored in the authorized device includes PK3, PK4, and SK4.

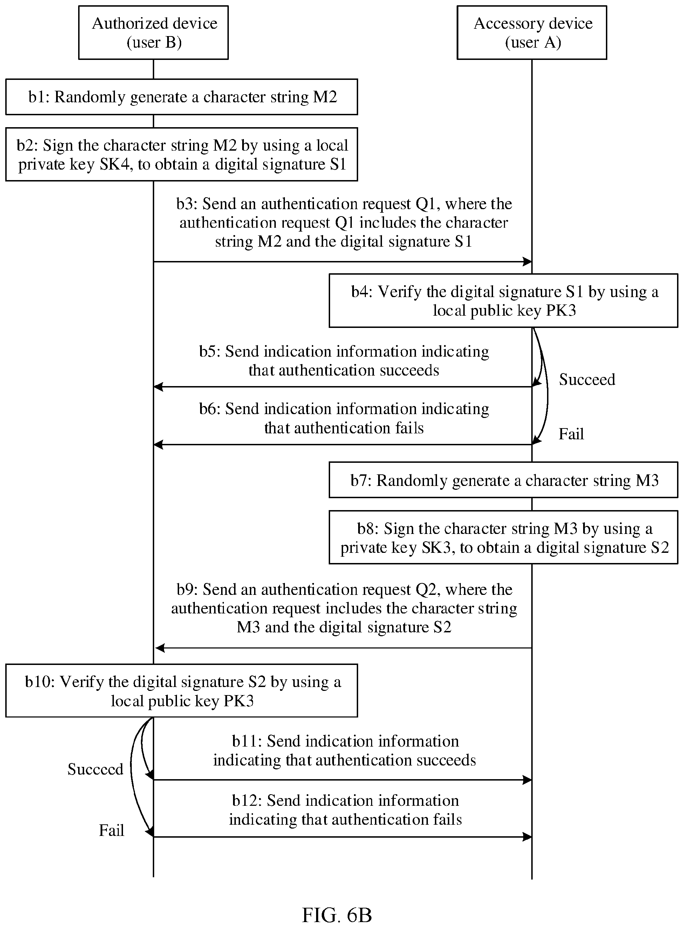

As shown in FIG. 6B, the authentication method may include two parts: forward authentication and reverse authentication. The forward authentication includes but is not limited to some or all of the following steps, to determine whether the authorized device really includes the private key SK4.

b1: The authorized device randomly generates a character string M2.

b2: The authorized device signs the character string M2 by using the private key SK4, to obtain a digital signature S1.

Specifically, the authorized device first calculates a digest value of the character string M2, and then encrypts the digest value by using the private key SK4, where an obtained ciphertext is the digital signature S1.

b3: The authorized device sends an authentication request Q1 to the accessory device, where the authentication request Q1 includes the character string M2 and the digital signature S1.

b4: The accessory device verifies the digital signature S1 by using the local public key PK3. If the signature verification succeeds, b5 is performed; or if the signature verification fails, b6 is performed.

The authentication request further includes an identifier of the authorized device. After the accessory device receives the authentication request, if the device that sends the authentication request is not the controlling device, the accessory device selects to verify the authentication request by using the local second credential. Specifically, the accessory device calculates the digest value of the received character string M1, and decrypts the digital signature S1 by using the local public key PK3 in the second credential to obtain a digest value. If the digest value obtained through calculation is the same as the digest value obtained through decryption, it indicates that the authorized device has a private key matching the local public key PK3, the authorized device is a trusted device, and the authentication succeeds; or if the two digest values are different, it indicates that the authorized device does not have a private key matching the local public key PK3, the authorized device is not a trusted device, and the authentication fails.

In some embodiments, the authentication request Q1 may also carry a digest value of the character string M2 instead of the character string M2. In this case, the accessory device may compare the digest value obtained through decryption with the digest value carried in the authentication request.

b5: The accessory device sends, to the authorized device, indication information indicating that the authentication succeeds.

b6: The accessory device sends, to the authorized device, indication information indicating that the authentication fails.

The reverse authentication includes but is not limited to some or all of the following steps, to determine whether the accessory device really includes the private key SK3.

b7: The accessory device randomly generates a character string M3.

b8: The accessory device signs the character string M3 by using the private key SK3, to obtain a digital signature S2.

b9: The accessory device sends an authentication request Q2 to the authorized device, where the authentication request includes the character string M3 and the digital signature S2.

b10: The authorized device verifies the digital signature S2 by using the local public key PK3. If the signature verification succeeds, b11 is performed; or if the signature verification fails, b12 is performed.

Specifically, the authorized device calculates the digest value of the received character string M3, and decrypts the digital signature S2 by using the local public key PK3 in the second credential to obtain the digest value. If the digest value obtained through calculation is the same as the digest value obtained through decryption, it indicates that the accessory device has a private key matching the local public key PK3, the accessory device is a trusted device, and the authentication succeeds; or if the two digest values are different, it indicates that the accessory device does not have a private key matching the local public key PK3, the accessory device is not a trusted device, and the authentication fails.

b11: The authorized device sends, to the accessory device, indication information indicating that the authentication succeeds.

b12: The authorized device sends, to the accessory device, indication information indicating that the authentication fails.

It should be noted that for specific implementation of signature and signature verification, refer to the term description part, or refer to related descriptions in the forward authentication. Details are not described herein again.

In some embodiments, the reverse authentication process may not be included. In this case, the second credential sent by the controlling device to the authorized device may include only PK4 and SK4.

In implementation 2, the authorized device accesses the accessory device in the name of the controlling device. However, because the credential of the authorized device is an indirect credential, the authorized device may be distinguished from the controlling device and has a different permission from that of the controlling device. The accessory device uses different management policies based on different credentials. For details, refer to related descriptions in the foregoing authorization phase and the following access phase.

In some embodiments, the character strings M2 and M3 may also be replaced with the public key PK3 or PK4. In this case, the public key PK3 and the public key PK4 are locally stored in both the authorized device and the accessory device, and the authentication request does not need to carry the public key PK3 or PK4, and does not need to carry a digest value of the public key PK3 or PK4.

It should be noted that the second credentials locally stored in the authorized device do not necessarily include all the second credentials stored in the controlling device, and may include only the private key SK4, or include only the private key SK4 and the public key PK3.

### Implementation 3:

The second credentials include PK3, SK3, PK4, and SK4. The second credentials locally stored in the controlling device include PK3, PK4, and SK4, and the second credentials locally stored in the accessory device include PK3, SK3, and PK4. The second credential sent by the controlling device to the authorized device includes PK3 and PK4, that is, the second credential locally stored in the authorized device includes PK3 and PK4, but does not include the private key SK3 of the controlling device.

As shown in FIG. 6C-1 and FIG. 6C-2, the authentication method may include two parts: forward authentication and reverse authentication. A forward authentication process may include but is not limited to the following steps, to determine whether the authorized device is authorized by the controlling device.

c1: The authorized device sends a signature request to the controlling device, where the signature request includes a public key PK5 to request the controlling device to sign PK5, and the authorized device includes the public key PK5 and a corresponding private key SK5.

c2: The controlling device signs the public key PK5 by using the private key SK4, to obtain a digital signature S3.

c3: The controlling device sends the digital signature S3 to the authorized device.

c4: The authorized device receives the digital signature S3.

c5: The authorized device sends an authentication request Q3 to the accessory device, where the authentication request includes the public key PK5 and the digital signature S3.

c6: The accessory device verifies the digital signature S3 by using the local public key PK4. If the signature verification succeeds, c7 is performed; or if the signature verification fails, c8 is performed.

After receiving the authentication request, the accessory device decrypts the digital signature S3 by using the public key PK4 to obtain a digest value of the public key PK5, and then calculates a digest value of the public key PK5 included in the authentication request. If the digest value obtained through calculation is the same as the digest value obtained through decryption, the authentication succeeds; or if the two digest values are different, the authentication fails.

c7: The accessory device sends, to the authorized device, indication information indicating that the authentication succeeds.

c8: The accessory device sends, to the authorized device, indication information indicating that the authentication fails.

The authorized device may perform reverse authentication to determine whether the accessory device really includes the private key SK3. A reverse authentication process may be the same as the reverse authentication process in the foregoing implementation 2, that is, includes but is not limited to the following steps.

c9: The accessory device signs the character string M4 by using the private key SK3, to obtain a digital signature S4.

c10: The accessory device sends an authentication request Q4 to the authorized device, where the authentication request includes the character string M4 and the digital signature S4.

c11: The authorized device verifies the digital signature S4 by using the local public key PK3.

Specifically, the authorized device calculates the digest value of the received character string M4, and decrypts the digital signature S4 by using the local public key PK3 in the second credential to obtain the digest value. If the digest value obtained through calculation is the same as the digest value obtained through decryption, it indicates that the accessory device has a private key matching the local public key PK3, the accessory device is a trusted device, and the authentication succeeds; or if the two digest values are different, it indicates that the accessory device does not have a private key matching the local public key PK3, the accessory device is not a trusted device, and the authentication fails.

c12: The authorized device sends, to the accessory device, indication information indicating that the authentication succeeds.

c13: The authorized device sends, to the accessory device, indication information indicating that the authentication fails.

In some embodiments, the character string M4 may be replaced with the public key PK3, PK4, or PK5. In this case, the public key PK3, the public key PK4, and the public key PK5 (the accessory device obtains PK5 after forward authentication) are locally stored in both the authorized device and the accessory device. The authentication request does not need to carry the public key PK3, PK4, or PK5, and does not need to carry the digest value of the public key PK3, PK4, or PK5.

### (3) Access phase

After the authentication succeeds, the authorized device can access data or a service in the accessory device.

S110: The authorized device sends an access request to the accessory device.

In some application scenarios, the accessory device is a smart acoustic device, and the access request carries to-be-played data and is used to request the accessory device to play the to-be-played data.

In some application scenarios, the accessory device is a smart camera, and the access request carries to-be-played data and is used to request a data stream that is currently monitored and photographed by the accessory device.

S111: The accessory device processes the access request from the authorized device according to the management policy for the second credential.

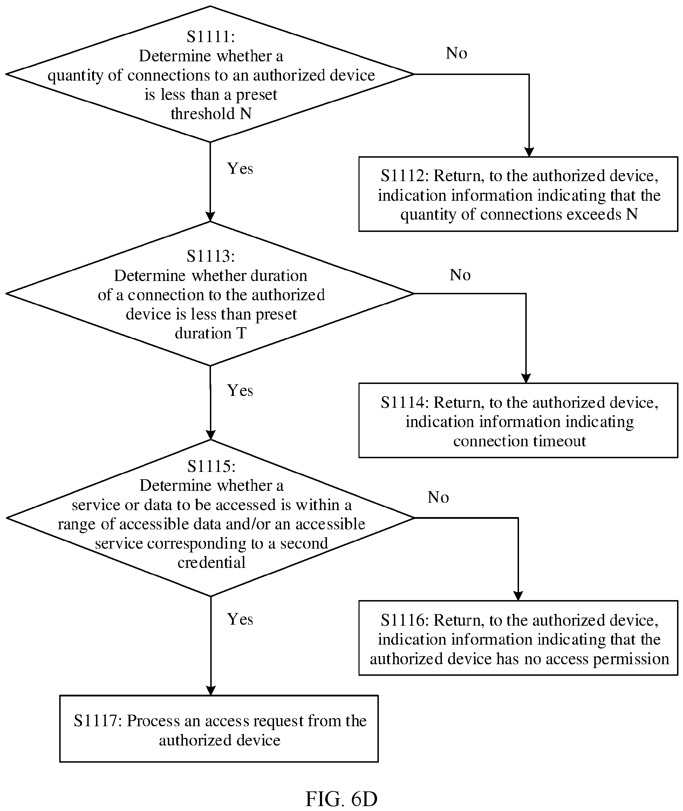

Each time after authenticating the authorized device, the accessory device increases a quantity of allowed connection times of the authorized device that is recorded by the accessory device by 1, and may further record total access duration. Therefore, before responding to the access request each time, the accessory device may determine whether the access request of the authorized device complies with the management policy for the second credential (refer to Table 8), and respond to the access request only when the access request complies with the management policy. Specifically, as shown in FIG. 6D, the accessory device may perform some or all of the following steps.

S1111: Determine whether a quantity of connections to the authorized device is less than a preset threshold N. If the quantity of connections to the authorized device is not less than the preset threshold N, S1112 is performed; or if the quantity of connections to the authorized device is less than the preset threshold N, S1113 is performed.

S1112: Return, to the authorized device, indication information indicating that the quantity of connections exceeds N.

S1113: Determine whether duration of a connection to the authorized device is less than preset duration T. If the duration of a connection to the authorized device is not less than the preset duration T, S1114 is performed; or if the duration of a connection to the authorized device is less than the preset duration T, S1115 is performed.

The connection duration may be duration of a single connection between the authorized device using the second credential and the accessory device, or may be total duration of a connection between the authorized device using the second credential and the accessory device.

S1114: Return, to the authorized device, indication information indicating connection timeout.

S1115: Determine whether a service or data to be accessed is within a range of accessible data and/or an accessible service corresponding to the second credential. If the service or data to be accessed is not within the range of accessible data and/or an accessible service corresponding to the second credential, S1116 is performed; or if the service or data to be accessed is within the range of accessible data and/or an accessible service corresponding to the second credential, S1117 is performed.

S1116: Return, to the authorized device, indication information indicating that the authorized device has no access permission.

S1117: Process the access request from the authorized device.

It should be understood that FIG. 6D shows an example of an implementation of determining, by the accessory device before responding to the service request, whether the service request complies with the management policy for the second credential when the management policy may include the quantity of allowed connection times, the allowed connection duration, and the accessible data and/or the accessible service. It should be understood that the determining in the foregoing steps S1111, S1113, and S1115 may not be performed in sequence.

In some embodiments, the management policy may include one or two of the quantity of allowed connection times, allowed connection duration, the accessible data and/or the accessible service. In this case, it only needs to determine whether the one or two items included in the management policy meet the management policy for the second credential. For details, refer to the determining method shown in FIG. 6D. Details are not described herein again.

It should be understood that, when the controlling device performs access, it may also be determined whether the access request of the controlling device complies with the management policy for the first credential (refer to Table 8). A specific implementation principle is the same as that of the foregoing S1111 to S1117, and details are not described herein again.

### Embodiment 2

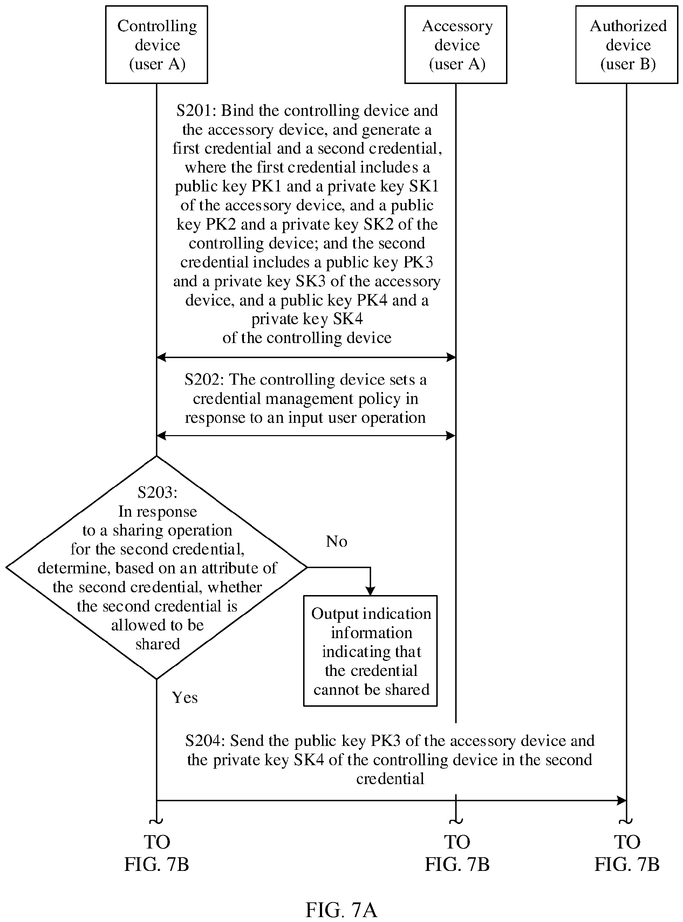

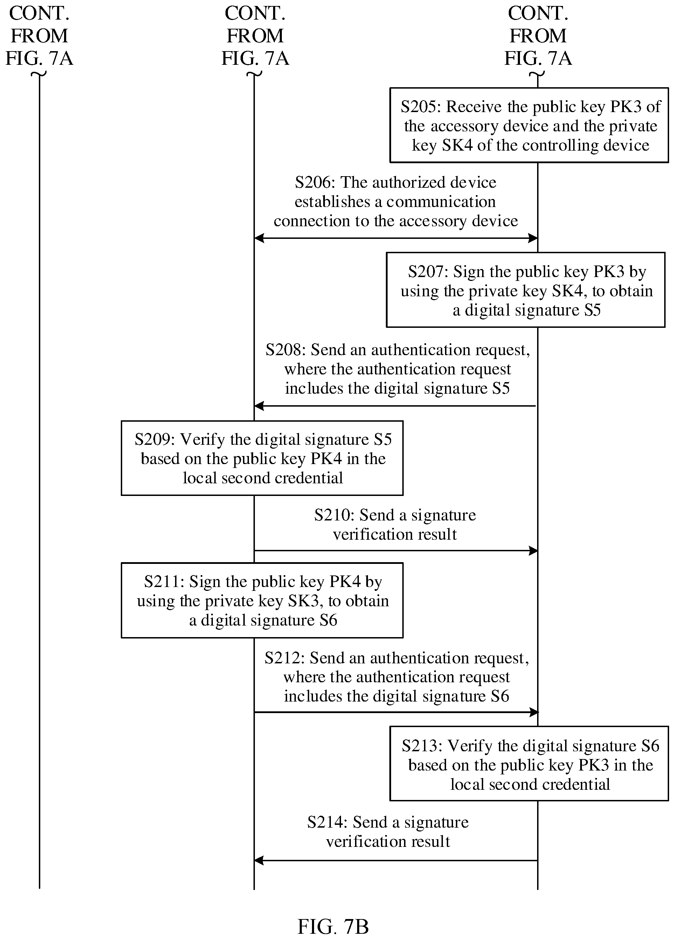

FIG. 7A and FIG. 7B are a schematic flowchart of a device authorization and authentication method according to an embodiment of this application. The method is an example of the device authorization method in the device authorization methods shown in FIG. 4A and FIG. 4B when both the first credential and the second credential are asymmetric credentials. As shown in FIG. 7A and FIG. 7B, the method may include but is not limited to the following steps.

S201: Bind a controlling device and an accessory device, and generate a first credential and a second credential. The first credential includes a public key PK1 and a private key SK1 of the accessory device, and a public key PK2 and a private key SK2 of the controlling device. The second credential includes a public key PK3 and a private key SK3 of the accessory device, and a public key PK4 and a private key SK4 of the controlling device.

It should be noted that the second credential stored in the accessory device includes the public key PK1 and the private key SK1 of the accessory device and the public key PK2 of the controlling device, and the second credential stored in the controlling device includes the public key PK1 of the accessory device, and the public key PK2 and the private key SK4 of the controlling device.

For a method for generating the first credential and the second credential, refer to related descriptions in the implementation 2 of step S101 in Embodiment 1. Details are not described herein again.

It should be understood that the first credential may alternatively be a symmetric key key1. For details, refer to Embodiment 1. Details are not described herein again.

S202: The controlling device sets a credential management policy in response to an input user operation.

S203: In response to a received sharing operation for the second credential, the controlling device determines, based on attribute information of the second credential, whether the second credential is allowed to be shared. If the second credential is allowed to be shared, S204 is performed; or if the second credential is not allowed to be shared, indication information indicating that the credential cannot be shared is output.

For specific implementation of S202 and S203, refer to S102 and S103 in Embodiment 1. Details are not described herein again.

S204: The controlling device sends the public key PK3 of the accessory device and the private key SK4 of the controlling device in the second credential to an authorized device.

S205: The authorized device receives the public key PK3 of the accessory device and the private key SK4 of the controlling device.

In this case, the second credential locally stored in the authorized device includes the private key SK4 of the controlling device and the public key PK3 of the accessory device.

S206: The authorized device establishes a communication connection to the accessory device.

Specifically, a connection manner may include but is not limited to a short-distance communication connection such as Bluetooth, Wi-Fi, or NFC.

S207: The authorized device signs the public key PK3 by using the private key SK4, to obtain a digital signature S5.

S208: The authorized device sends an authentication request to the accessory device, where the authentication request includes the digital signature S5.

S209: The accessory device verifies the digital signature S5 based on the public key PK4 in the local second credential.

After receiving the authentication request, the accessory device decrypts the digital signature S5 by using the public key PK4 to obtain a digest value of the public key PK3, and then calculates a digest value of the locally stored public key PK3. If the digest value obtained through calculation is the same as the digest value obtained through decryption, the authentication succeeds; or if the two digest values are different, the authentication fails.

S210: The accessory device sends a signature verification result to the authorized device.

When the authentication succeeds, the signature verification result indicates that the authentication succeeds; or when the authentication fails, the signature verification result indicates that the authentication fails.

Further, a reverse authentication process may be further included, which specifically includes the following steps.

S211: The accessory device signs the public key PK4 by using the private key SK3, to obtain a digital signature S6.

S212: The accessory device sends an authentication request to the authorized device, where the authentication request includes the digital signature S6.

S213: The authorized device verifies the digital signature S6 based on the public key PK3 in the local second credential.

After receiving the authentication request, the authorized device decrypts the digital signature S6 by using the public key PK3 to obtain a digest value of the public key PK4, and then calculates a digest value of the locally stored public key PK4. If the digest value obtained through calculation is the same as the digest value obtained through decryption, the authentication succeeds; or if the two digest values are different, the authentication fails.

S214: The authorized device sends a signature verification result to the accessory device.

When the authentication succeeds, the signature verification result indicates that the authentication succeeds; or when the authentication fails, the signature verification result indicates that the authentication fails.

It should be understood that, in step S211, the public key PK3 may also be signed.

### Embodiment 3

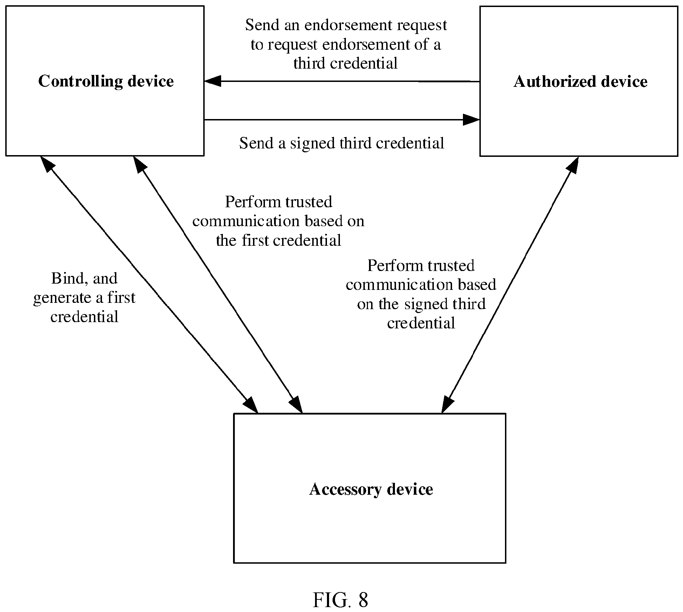

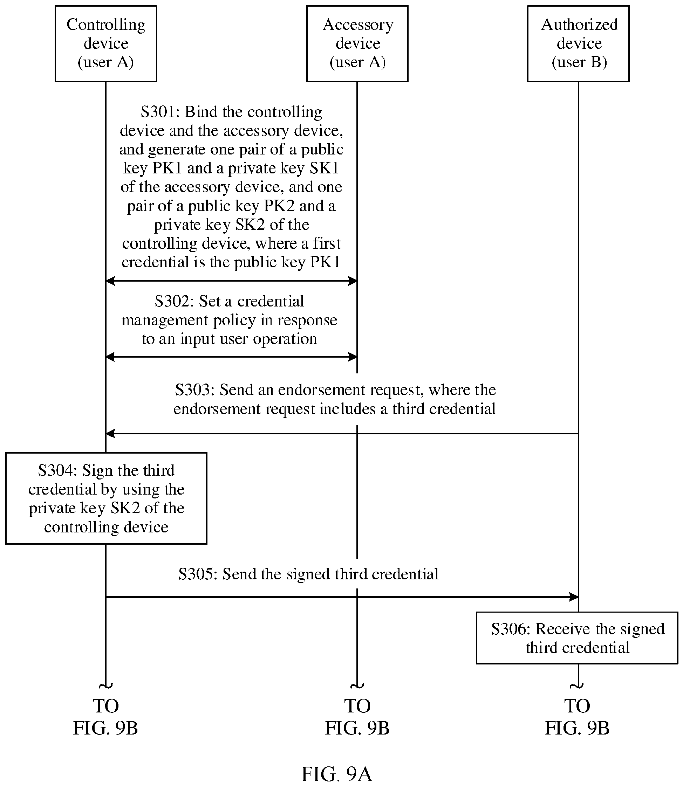

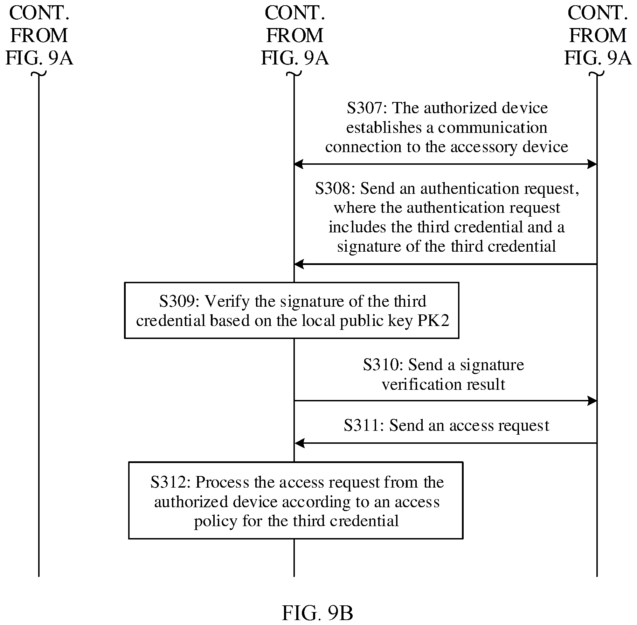

FIG. 8 and FIG. 9A and FIG. 9B are respectively an illustration diagram and a schematic flowchart of a device authorization method. The method may be implemented by the system shown in FIG. 2A or FIG. 2C, and may include three phases: authorization, authentication, and data access.

### (1) Authorization phase

S301: Bind a controlling device and an accessory device, and generate a first credential, where the first credential includes one pair of a public key PK1 and a private key SK1 of the accessory device, and one pair of a public key PK2 and a private key SK2 of the controlling device.

Through exchange performed by the controlling device and the accessory device, the accessory device obtains the public key PK2, and the controlling device obtains the public key PK. In this case, the first credential stored in the accessory device includes the public key PK1 and the private key SK1 of the accessory device and the public key PK2 of the controlling device. The first credential stored in the controlling device includes the public key PK2 and the private key SK2 of the controlling device and the public key PK1 of the accessory device. The controlling device may perform trusted communication with the authorized device. Specifically, the controlling device may use the public key PK1 to encrypt data to be transmitted to the accessory device, and the accessory device decrypts the data by using the private key SK1. Similarly, the accessory device may use the public key PK2 to encrypt data to be transmitted to the controlling device, and the controlling device decrypts the data by using the private key SK2.

S302: The controlling device sets a credential management policy in response to an input user operation.

In some embodiments, a credential may be classified as a first credential and a non-first credential. The controlling device may set a management policy for the first credential and a management policy for the non-first credential. The management policy may include management of a quantity of allowed connection times, allowed connection duration, accessible data and/or an accessible service, and the like of a device that uses the credential. For example, a correspondence between the first credential and the quantity of allowed connection times, the allowed connection duration, and the accessible data and/or the accessible service and a correspondence between the non-first credential and the quantity of allowed connection times, the allowed connection duration, and the accessible data and/or the accessible service are set. Further, the correspondence may be further sent to the accessory device, so that the accessory device processes access requests from different devices based on the credential management policy. Table 9 shows an example of credential management.

**Table 9**

| Credential type | Accessible data and/or service | Quantity of allowed connection times | Allowed connection duration |
|---|---|---|---|
| First credential | Service 1, data 1, service 2, and data 1 | Not limited | Not limited |
| Non-first credential | Service 1 and data 1 | N times | Duration T |

In some embodiments, S302 may alternatively be performed by the accessory device. S302 may alternatively be performed in any phase or at any time of any phase.

S303: The authorized device sends an endorsement request to the controlling device, where the endorsement request includes a third credential.

The endorsement request is used to request the controlling device to endorse the third credential. The third credential may be a symmetric key or an asymmetric key.

In some embodiments, the authorized device may generate one pair of public and private keys, that is, a public key PK5 and a private key SK5. In this case, the third credential stored in the authorized device includes the public key PK5 and the private key SK5. The third credential carried in the endorsement request includes the public key PK5 but does not include the private key SK5.

In some embodiments, the authorized device may generate a symmetric key, for example, a symmetric key Key3. In this case, the third credential includes the symmetric key Key3.

S304: The controlling device signs the third credential by using the private key SK2 of the controlling device.

Specifically, the controlling device calculates a digest value of the third credential (the public key PK5 or the symmetric key Key3), and then encrypts the digest value by using the private key SK2 of the controlling device, to obtain a digital signature of the third credential. After being signed, the third credential is also referred to as a signed third credential in this embodiment of this application.

S305: The controlling device sends the signed third credential to the authorized device.

S306: The authorized device receives the signed third credential.

### (2) Authentication phase

S307: The authorized device establishes a communication connection to the accessory device.

Specifically, a connection manner may include but is not limited to a short-distance communication connection such as Bluetooth, Wi-Fi, or NFC.

S308: The authorized device sends an authentication request to the accessory device, where the authentication request includes the third credential and a signature of the third credential.

When the third credential is an asymmetric key, the authentication request carries the public key PK5.

S309: The accessory device verifies the signature of the third credential based on the local public key PK2.

Specifically, the accessory device stores the first credential, including the public key PK1 and the private key SK1 of the accessory device and the public key PK2 of the controlling device. The accessory device may decrypt the signature of the third credential by using the local public key PK2 to obtain a digest value, calculate a digest value of the third credential carried in the authentication request, and compare the digest value obtained through decryption with the digest value obtained through calculation. If the digest value obtained through decryption is the same as the digest value obtained through calculation, the signature verification succeeds; or if the two digest values are different, the signature verification fails.

S310: The accessory device sends a signature verification result to the authorized device.

After the signature verification succeeds, the accessory device may store the third credential, and send, to the authorized device, indication information indicating that the signature verification succeeds; or if the signature verification fails, the accessory device sends, to the authorized device, indication information indicating that signature verification fails or the authentication fails.

When the third credential is an asymmetric key, the accessory device further sends the public key PK1 to the authorized device.

In this case, the third credential stored in the accessory device includes a public key PK5 of the authorized device, and the public key PK1 and the private key SK1 of the authorized device. The third credential stored in the authorized device includes the public key PK5 and the private key SK5 of the authorized device and the public key PK1 of the accessory device.

When the third credential is an asymmetric key, a reverse authentication process is further included. For specific implementation, refer to an implementation of the reverse authentication process in the foregoing Embodiment 1. Details are not described herein again.

It should be understood that, when the accessory device is connected to and authenticated by the authorized device next time, authentication may be performed by using the third credential.

### (3) Access phase

After the authentication succeeds, the authorized device can access data or a service in the accessory device. Optionally, transmission may be performed between the authorized device and the accessory device by using an encrypted transmission channel agreed upon in the authentication phase.

For example, when the third credential is a symmetric key Key3, the authorized device and the accessory device may communicate based on the symmetric key Key3.

For another example, when the third credential is the public key PK5, the authorized device may use the public key PK1 to encrypt data to be transmitted to the accessory device, and the accessory device decrypts the data by using the private key SK1. Similarly, the accessory device may use the public key PK5 to encrypt data to be transmitted to the authorized device, and the authorized device decrypts the data by using the private key SK5.

S311: The authorized device sends an access request to the accessory device.

After the authentication succeeds, the authorized device can access data or a service in the accessory device.

In some application scenarios, the accessory device is a smart acoustic device, and the access request carries to-be-played data and is used to request the accessory device to play the to-be-played data.

In some application scenarios, the accessory device is a smart camera, and the access request carries to-be-played data and is used to request a data stream that is currently monitored and photographed by the accessory device.

S312: Process the access request from the authorized device according to a management policy for the third credential.

In some embodiments, the accessory device first determines whether the third credential obtained through signature verification is the first credential, and if the third credential is not the first credential, processes the access request according to a management policy for the non-first credential. In this case, the management policy for the third credential is the management policy for the non-first credential (refer to Table 9).

In some embodiments, after the signature verification on the third credential succeeds, the accessory device or the controlling device may set the management policy for the third credential, for example, one or more of the quantity of allowed connection times, the allowed connection duration, and the accessible data and/or the accessible service. Table 10 shows an example of the management policy for the third credential.

**Table 10**

| Credential name | Accessible data and/or service | Quantity of allowed connection times | Allowed connection duration |
|---|---|---|---|
| First credential | Service 1, data 1, service 2, and data 1 | Not limited | Not limited |
| Third credential | Service 1 and data 1 | N times | Duration T |

A specific implementation principle of S312 is the same as that of the foregoing S 111. For details, refer to the specific implementation of S111 in Embodiment 1. Details are not described herein again.

### Embodiment 4

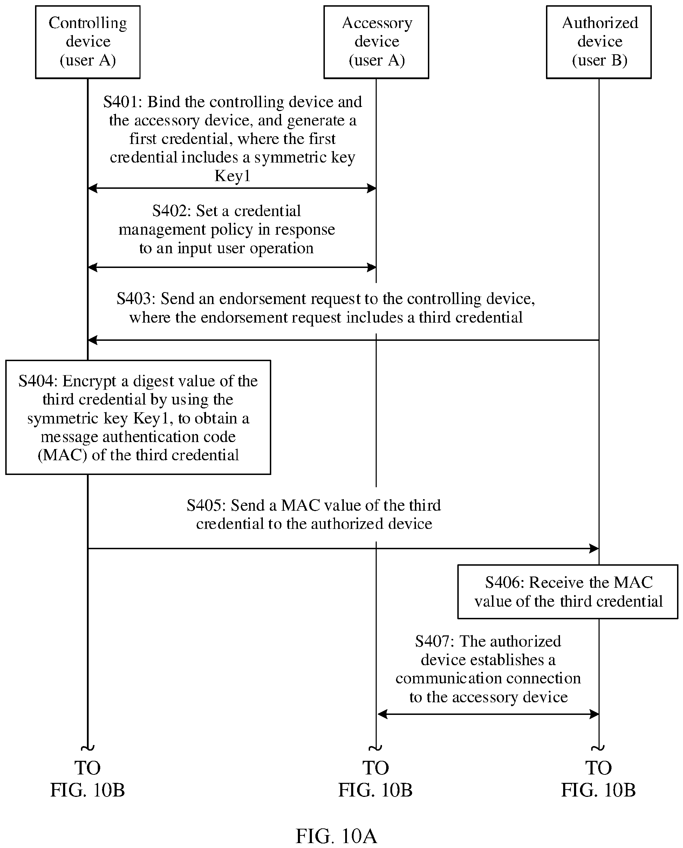

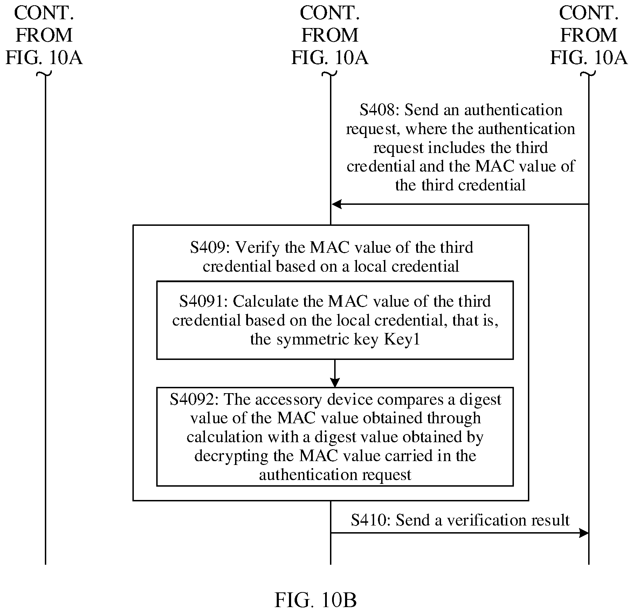

FIG. 10A and FIG. 10B are an illustration diagram and a schematic flowchart of a device authorization and authentication method. The method may be implemented by the system shown in FIG. 2A or FIG. 2C, and may include three phases: authorization, authentication, and data access.

### (1) Authorization phase

S401: Bind a controlling device and an accessory device, and generate a first credential, where the first credential includes a symmetric key Key1.

S402: The controlling device sets a credential management policy in response to an input user operation. For specific implementation of S402, refer to S302 in Embodiment 3. Details are not described herein again.

S403: The authorized device sends an endorsement request to the controlling device, where the endorsement request includes a third credential.

The third credential may be a symmetric key or an asymmetric key.

In some embodiments, the authorized device may generate one pair of public and private keys, that is, a public key PK5 and a private key SK5. In this case, the third credential includes the public key PK5.

In some embodiments, the authorized device may generate a symmetric key, for example, a symmetric key Key3. In this case, the third credential includes the symmetric key Key3.

S404: The controlling device calculates a message authentication code (MAC) of the third credential by using the symmetric key Key1.

For example, in response to the endorsement request, the controlling device calculates a digest value of the third credential, and then encrypts the digest value by using the symmetric key Key1, where an obtained ciphertext is the MAC value.

S405: The controlling device sends the MAC value of the third credential to the authorized device.

S406: The authorized device receives the MAC value of the third credential.

### (2) Authentication phase

S407: The authorized device establishes a communication connection to the accessory device.

Specifically, a connection manner may include but is not limited to a short-distance communication connection such as Bluetooth, Wi-Fi, or NFC.

S408: The authorized device sends an authentication request to the accessory device, where the authentication request includes the third credential and the MAC value of the third credential.

S409: The accessory device verifies the MAC value of the third credential based on a local credential.

Specifically, the following steps may be performed:

S4091: The accessory device calculates the MAC value of the third credential based on the local credential, that is, the symmetric key Key1.

S4092: The accessory device compares the MAC value obtained through calculation with the MAC value carried in the authentication request. If the two MAC values are the same, it indicates that the third credential is encrypted by using a same symmetric key, and the accessory device determines that the authorized device has a symmetric key Key1 that is the same as that of the accessory device, the authorized device is trusted, and the verification succeeds; or if the two MAC values are different, it indicates that the third credential is tampered with or the authorized device has a symmetric key Key1 that is different from that of the accessory device, the authorized device is untrusted, and the verification fails.

S410: The accessory device sends a verification result to the authorized device.

After the verification succeeds, the accessory device may store the third credential, and send, to the authorized device, indication information indicating that the verification succeeds or the authentication succeeds; or if the verification fails, the accessory device sends, to the authorized device, indication information indicating that the verification fails or the authentication fails.

Optionally, a management policy for the third credential may be further set, or an access request of a device whose credential is the third credential is processed according to a management policy for the non-first credential.

During next authentication, the authorized device may authenticate the accessory device by using the third credential, so as to access data or a service in the accessory device. For specific implementation of the access process, refer to the foregoing Embodiment 3. Details are not described herein again.

It should be noted that, in the foregoing Embodiment 3 and Embodiment 4, the signed third credential and the MAC value of the third credential may be referred to as verification information of the third credential, and both the signed third credential and the MAC value of the third credential are obtained by the controlling device by processing the third credential based on the locally stored first credential.

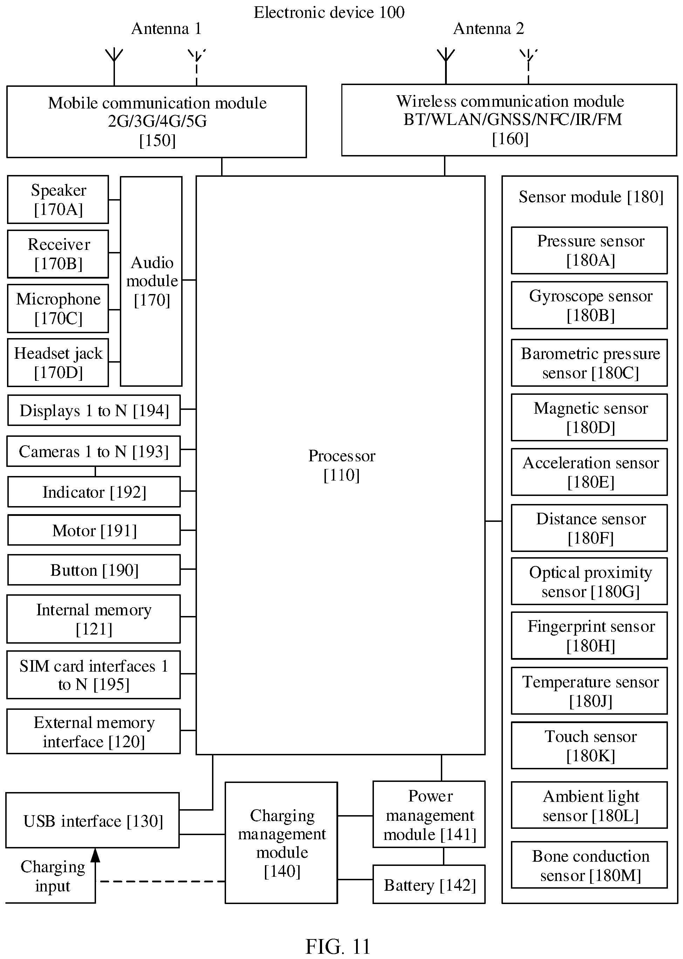

The following describes an electronic device according to an embodiment of this application. For example, FIG. 11 is a diagram of a structure of the electronic device 100 according to an embodiment of this application. The electronic device 100 may be the controlling device, an accessory device, an authorized device, or the like. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory, thereby avoiding repeated access, reducing waiting time of the processor 110, and improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type C interface, or the like. The USB interface 130 may be configured to be connected to the charger to charge the electronic device 100, or may be configured to transmit data between the electronic device 100 and a peripheral device, or may be configured to connect to a headset for playing an audio through the headset. The interface may be configured to connect to another electronic device like an AR device.

It may be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from an interface connection manner in this embodiment, or use a combination of a plurality of interface connection manners.

The charging management module 140 is configured to receive a charging input from the charger. The charger may be a wireless charger or a wired charger. In some embodiments in which wired charging is used, the charging management module 140 may receive a charging input from the wired charger through the USB interface 130. In some embodiments in which wireless charging is used, the charging management module 140 may receive a wireless charging input through a wireless charging coil of the electronic device 100. The charging management module 140 may further supply power to the electronic device by using the power management module 141 when the battery 142 is charged.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed, to improve antenna utilization. For example, the antenna 1 may be multiplexed as a diversity antenna of a wireless local area network. In some other embodiments, an antenna may be used in combination with a tuning switch.

The mobile communication module 150 may provide a solution, applied to the electronic device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal by an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the 5th Generation of wireless communication system (5G, the 5th Generation of wireless communication system), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a still image or a video. The camera 193 may include a 3D camera that can collect depth data of a photographed object. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to a DSP for processing. The DSP converts the digital image signal into a standard image signal of a format such as RGB or YUV. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transformation on frequency energy.

The video codec is configured to: compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, an application required by at least one function (for example, a sound play function and an image play function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash storage device, and a universal flash storage (universal flash storage, UFS).

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a hands-free call by using the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. The electronic device 100 may be provided with at least one microphone 170C. In some other embodiments, two microphones 170C may be disposed in the electronic device 100, to collect sound signals and further implement a noise reduction function. In some other embodiments, three, four, or more microphones 170C may alternatively be disposed in the electronic device 100, to collect a sound signal, implement noise reduction, and identify a sound source, so as to implement a directional recording function, and the like.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on a change in the capacitance. When a touch operation is performed on the display 194, the electronic device 100 detects intensity of the touch operation by using the pressure sensor 180A. The electronic device 100 may calculate a touch location based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on a messaging application icon, an instruction for viewing an SMS message is executed. When a touch operation whose touch operation intensity is greater than or equal to the first pressure threshold is performed on the messaging application icon, an instruction for creating an SMS message is executed.

The gyroscope sensor 180B may be configured to determine a moving posture of the electronic device 100. In some embodiments, an angular velocity of the electronic device 100 around three axes (that is, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall effect sensor. The electronic device 100 may detect opening and closing of a flip cover leather case by using the magnetic sensor 180D. In some embodiments, when the electronic device 100 is a flip machine, the electronic device 100 may detect opening and closing of the flip cover based on the magnetic sensor 180D. Further, a feature like automatic unlocking of the flip cover is set based on a detected opening or closing state of the leather case or a detected opening or closing state of the flip cover.

The acceleration sensor 180E may detect magnitudes of accelerations of the electronic device 100 in all directions (usually on three axes), and may detect a magnitude and a direction of gravity when the electronic device 100 is still. The acceleration sensor may be further configured to recognize a posture of the electronic device, and is applied to an application such as switching between landscape orientation and portrait orientation or a pedometer.

The distance sensor 180F is configured to measure a distance. The electronic device 100 may measure a distance in an infrared manner or a laser manner. In some embodiments, in a shooting scenario, the electronic device 100 may measure a distance through the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light by using the light emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically perform screen-off for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may be configured to automatically adjust white balance during photographing. The ambient light sensor 180L may further cooperate with the optical proximity sensor 180G to detect whether the electronic device 100 is in a pocket, to prevent an accidental touch.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 reduces performance of a processor near the temperature sensor 180J, to reduce power consumption and implement thermal protection. In some other embodiments, when the temperature is less than another threshold, the electronic device 100 heats the battery 142 to prevent the electronic device 100 from being abnormally powered off because of a low temperature. In some other embodiments, when the temperature is less than still another threshold, the electronic device 100 boosts an output voltage of the battery 142, to prevent abnormal power-off caused by a low temperature.

The touch sensor 180K is also referred to as a touch panel. The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor 180K. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 is compatible to different types of SIM cards. The SIM card interface 195 is also compatible to an external storage card. The electronic device 100 interacts with a network through the SIM card, to implement functions such as talking and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an eventdriven architecture, a microkernel architecture, a micro service architecture, or a cloud architecture. In this embodiment of this application, an Android system with a layered architecture is used as an example to describe a software structure of the electronic device 100.

In some embodiments, the processor 110 is configured to invoke an instruction in the memory or the internal memory 121, to perform the method performed by the controlling device in any one of Embodiments 1 to 4.

In some embodiments, the processor 110 is configured to invoke an instruction in the memory or the internal memory 121, to perform the method performed by the accessory device in any one of Embodiments 1 to 4.

In some embodiments, the processor 110 is configured to invoke an instruction in the memory or the internal memory 121, to perform the method performed by the authorized device in any one of Embodiments 1 to 4.

The technical terms used in embodiments of the present invention are only used to describe specific embodiments but are not intended to limit the present invention. In this specification, the singular forms "one", "this", and "the" are used to include plural forms at the same time, unless otherwise stated in the context. Further, the "include" and/or "including" used in the specification means the presence of the features, entirety, steps, operations, elements and/or components, but does not rule out the presence or addition of one or more other features, entireties, steps, operations, elements and/or components.

A person of ordinary skill in the art may understand that all or some of the procedures of the methods in the foregoing embodiments may be implemented by a computer program instructing related hardware. The program may be stored in a computer-readable storage medium. When the program is executed, the procedures of the methods in embodiments may be performed. The foregoing storage medium includes: any medium that can store program code, such as a ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device authorization method, comprising:
binding a controlling device and an accessory device to negotiate a first credential and a second credential, wherein the first credential is non-distributable and is used to authenticate the controlling device, and the second credential is distributable and is used to authenticate an authorized device; and
in response to a sharing operation for the second credential, sending, by the controlling device, the second credential to the authorized device when an attribute of the second credential is "distributable".

2. The method according to claim 1, wherein the binding a controlling device and an accessory device to negotiate a first credential and a second credential comprises:
establishing, by the controlling device, a communication connection to the accessory device;
generating, by the controlling device, a shared key based on an out-of-band shared password, wherein the out-of-band shared password is used to bind the accessory device, and the accessory device comprises the shared key or has generated the shared key based on the out-of-band shared password;
negotiating, by the controlling device, the first credential with the accessory device based on the shared key; and
negotiating, by the controlling device, the second credential with the accessory device based on the shared key.

3. The method according to claim 1 or 2, wherein the accessory device comprises a first public key and a first private key corresponding to the first public key, the controlling device comprises a second public key and a second private key corresponding to the second public key, and the negotiating, by the controlling device, the first credential with the accessory device based on the shared key comprises:
exchanging, by the controlling device, a public key with the accessory device based on the shared key, to obtain the first public key; and
storing, by the controlling device, the first credential, wherein the first credential stored in the controlling device comprises the first public key, the second public key, and the second private key, and the first credential stored in the accessory device comprises the first public key, the first private key, and the second public key.

4. The method according to claim 1 or 2, wherein the accessory device comprises a third public key and a third private key corresponding to the third public key, the controlling device comprises a fourth public key and a fourth private key corresponding to the fourth public key, and the negotiating, by the controlling device, the second credential with the accessory device based on the shared key comprises:
exchanging, by the controlling device, a public key with the accessory device based on the shared key, to obtain the third public key; and
storing, by the controlling device, the second credential, wherein the second credential stored in the controlling device comprises the third public key, the fourth public key, and the fourth private key, and the second credential stored in the accessory device comprises the third public key, the third private key, and the fourth public key.

5. The method according to claim 4, wherein the second credential sent to the authorized device comprises the fourth public key, or comprises the fourth public key, the third public key, and the fourth public key.

6. The method according to claim 4, wherein the second credential sent to the authorized device comprises the third public key and the fourth public key, and the method further comprises:
receiving, by the controlling device, a signature request from the authorized request, wherein the signature request carries the fifth public key, and the fifth public key is a public key of the authorized device;
signing, by the controlling device, the fifth public key by using the fourth private key, to obtain a digital signature; and
sending, by the controlling device, the digital signature to the authorized device, wherein the digital signature is used by the accessory device to perform authentication on the authorized device.

7. The method according to any one of claims 1 to 6, wherein the method further comprises:
setting, by the controlling device, a management policy for the first credential and a management policy for the second credential in response to an input user operation, wherein each management policy comprises at least one of a quantity of allowed connection times, allowed connection duration, and accessible data and/or an accessible service; and
sending, by the controlling device, the management policy for the first credential and the management policy for the second credential to the accessory device.

8. A device authorization method, comprising:
binding an accessory device and a controlling device to negotiate a first credential and a second credential, wherein the first credential is non-distributable and is used to authenticate the controlling device, and the second credential is distributable and is used to authenticate an authorized device;
receiving, by the accessory device, a first authentication request from the authorized device, wherein the first authentication request comprises first information and verification information, and the verification information is obtained by processing the first information based on the second credential stored in the controlling device;
verifying, by the accessory device, the verification information based on the local second credential; and
if the verification succeeds, sending, by the accessory device to the authorized device, indication information indicating that the authentication succeeds.

9. The method according to claim 8, wherein the second credential stored in the controlling device comprises the third public key, the fourth public key, and the fourth private key, and the second credential stored in the accessory device comprises the third public key, the third private key, and the fourth public key.

10. The method according to claim 9, wherein the first information is a first character string, the verification information is a first digital signature, and the first digital signature is a signature that is of the first character string and that is obtained by using the fourth private key; and the verifying, by the accessory device, the verification information based on the local second credential comprises:
decrypting, by the accessory device, the first digital signature by using the local third public key, to obtain a digest value; and
calculating, by the accessory device, a digest value of the first character string, wherein
if the digest value obtained through calculation is the same as the digest value obtained through decryption, the verification succeeds; or
if the digest value obtained through calculation is different from the digest value obtained through decryption, the verification fails.

11. The method according to claim 10, wherein the method further comprises: the authorized device comprises a fifth public key and a fifth private key corresponding to the fifth public key, the first information is the fifth public key, the verification information is a third digital signature, and the third digital signature is a signature that is of the fifth public key and that is obtained by using the third private key; and the verifying, by the accessory device, the verification information based on the local second credential comprises:
decrypting, by the accessory device, the third digital signature by using the local third public key, to obtain a digest value; and
calculating, by the accessory device, a digest value of the fifth public key, wherein
if the digest value obtained through calculation is the same as the digest value obtained through decryption, the verification succeeds; or
if the digest value obtained through calculation is different from the digest value obtained through decryption, the verification fails.

12. The method according to claim 10 or 11, wherein the method further comprises:
signing, by the accessory device, a second character string by using the third private key, to obtain a second digital signature; and
sending, by the accessory device, a second authentication request to the authorized device, wherein the second authentication request comprises the second character and the second digital signature, and the second digital signature is used by the authorized device to perform signature verification based on the local third public key.

13. The method according to claim 8, wherein the second credential is a symmetric key, the first information is a character string, the verification information is a MAC value of the first information, and the verifying, by the accessory device, the verification information based on the local second credential comprises:
decrypting, by the accessory device, the verification information by using the locally stored second credential, to obtain a digest value; and
calculating, by the accessory device, a digest value of the first information, wherein
if the digest value obtained through calculation is the same as the digest value obtained through decryption, the verification succeeds; or
if the digest value obtained through calculation is different from the digest value obtained through decryption, the verification fails.

14. The method according to any one of claims 8 to 13, wherein the method further comprises:
receiving, by the accessory device, a management policy for the first credential and a management policy for the second credential, wherein each management policy comprises at least one of a quantity of allowed connection times, allowed connection duration, and accessible data and/or an accessible service;
receiving, by the accessory device, an access request; and
if the access request comes from the controlling device, responding, by the accessory device, to the access request according to the management policy for the first credential; or
if the access request comes from the authorized device or does not come from the controlling device, responding, by the accessory device, to the access request according to the management policy for the second credential.

15. The method according to claim 14, wherein that if the access request comes from the authorized device, the responding to the access request according to the management policy for the second credential comprises at least one of the following steps:
determining whether a quantity of connections to the authorized device is less than N, wherein N is a positive integer;
determining whether duration of a connection to the authorized device is less than preset duration; or
determining whether a service or data that is to be accessed by the access request is within a range of accessible data and/or an accessible service corresponding to the second credential.

16. A device authorization method, comprising:
binding an accessory device and a controlling device to negotiate a first credential;
receiving, by the accessory device, an authentication request from the authorized device, wherein the authentication request comprises a third credential and the verification information, and the verification information is obtained by the controlling device by processing the third credential based on the locally stored first credential;
verifying, by the accessory device, the verification information by using the local first credential; and
if the verification succeeds, sending, by the accessory device to the authorized device, indication information indicating that the authentication succeeds.

17. The method according to claim 16, wherein the first credential comprises a first public key of the accessory device, a first private key corresponding to the first public key, a second public key of the controlling device, and a second private key corresponding to the second public key; the third credential is a public key or a symmetric key of the authorized device; the verification information is a signature that is of the third credential and that is obtained by using the second private key stored in the controlling device; and the verifying, by the accessory device, the verification information by using the local first credential comprises:
performing, by the accessory device, signature verification on the third credential by using the second public key, wherein when the signature verification succeeds, the verification succeeds.

18. The method according to claim 16, wherein the first credential comprises a first symmetric key, the verification information is a MAC value that is of the third credential and that is calculated by using the first symmetric key stored in the controlling device, and the verifying, by the accessory device, the verification information by using the local first credential comprises:
calculating, by the accessory device, a MAC value of the third credential by using the local first symmetric key; and
determining, by the accessory device, that the verification succeeds when the MAC value obtained through calculation is the same as the MAC value carried in the authentication request.

19. The method according to any one of claims 16 to 18, wherein the method further comprises:
receiving, by the accessory device, a management policy for the first credential and a management policy for a non-first credential, wherein each management policy comprises at least one of a quantity of allowed connection times, allowed connection duration, and accessible data and/or an accessible service;
receiving, by the accessory device, an access request; and
if the access request comes from the controlling device, responding, by the accessory device, to the access request according to the management policy for the first credential; or
if the access request comes from the authorized device or does not come from the controlling device, responding, by the accessory device, to the access request according to the management policy for the non-first credential.

20. The method according to claim 19, wherein that if the access request comes from the authorized device, the responding to the access request according to the management policy for the non-first credential comprises at least one of the following steps:
determining whether a quantity of connections to the authorized device is less than N, wherein N is a positive integer;
determining whether duration of a connection to the authorized device is less than preset duration; or
determining whether a service or data that is to be accessed by the access request is within a range of accessible data and/or an accessible service corresponding to the second credential.

21. A device authorization method, comprising:
sending, by an authorized device, an endorsement request to a controlling device, wherein the endorsement request comprises a third credential;
receiving, by the authorized device, verification information from the controlling device, wherein the verification information is obtained by the controlling device by processing the third credential based on the locally stored first credential, and the first credential is used for trusted communication between the controlling device and the accessory device; and
sending, by the authorized device, an authentication request to the accessory device, wherein the authentication request comprises the third credential and the verification information, so that the accessory device verifies the verification information by using the local first credential.

22. The method according to claim 21, wherein
the first credential comprises a first public key of the accessory device, a first private key corresponding to the first public key, a second public key of the controlling device, and a second private key corresponding to the second public key; the third credential is a public key or a symmetric key of the authorized device; and the verification information is a signature that is of the third credential and that is obtained by using the second private key stored in the controlling device; or
the first credential comprises a first symmetric key, and the verification information is a MAC value that is of the third credential and that is calculated by using the first symmetric key stored in the controlling device.

23. An electronic device, comprising at least one processor and at least one memory, wherein the at least one processor is coupled to the at least one memory, the at least one memory is configured to store computer instructions, and when the processor executes the computer instructions, the electronic device performs the method performed by the controlling device according to any one of claims 1 to 7, or performs the method performed by the accessory device according to any one of claims 8 to 20, or performs the method performed by the authorized device according to claim 21 or 22.

24. A computer-readable storage medium, wherein the computer-readable storage medium stores computer program instructions, and when the computer program instructions are executed by a processor, the processor performs the method performed by the controlling device according to any one of claims 1 to 7, or performs the method performed by the accessory device according to any one of claims 8 to 20, or performs the method performed by the authorized device according to claim 21 or 22.
